# EUROPEAN PATENT APPLICATION

(11) **EP 4 814 742 A1**
(43) Date of publication of application: **30.09.2026**
(21) Application number: 24893119.8
(22) Date of filing: 22.10.2024
(51) Int. Cl.: G06F 16/248

(54) **INFORMATION TRANSMISSION METHOD AND APPARATUS, AND DEVICE**

(30) Priority: 21.11.2023 CN 202311557290
(71) Applicant: Datang Mobile Communications Equipment Co., Ltd., Beijing 100085 (CN)
(72) Inventor: ZHANG, Xiaokang, Beijing 100085 (CN); SUN, Wanfei, Beijing 100085 (CN); BAO, Shihan, Beijing 100085 (CN)
(74) Representative: dompatent
(86) International application number: PCT/CN2024/126314
(87) International publication number: WO 2025/107960

(57) **Abstract**

An information transmission method, apparatus, and device are provided. The information transmission method includes: receiving an Artificial Intelligence (AI) model request message sent by a terminal; sending, according to the AI model request message, an AI model policy query request for the terminal to a second core network device; receiving an AI model policy query response for the terminal fed back by the second core network device; and feeding back, according to the AI model policy query response, an AI model response message to the terminal; wherein the AI model response message carries AI model information.

## Description

### CROSS-REFERENCE TO RELATED APPLICATIONS

This present disclosure claims priority to Chinese Patent Application No. 202311557290.5, filed in China on November 21, 2023, and entitled "Information Transmission Method, Apparatus, and Device", the entire contents of which are incorporated herein by reference.

### TECHNICAL FIELD

The present disclosure relates to the field of communication technologies, and in particular, to an information transmission method, apparatus, and device.

### BACKGROUND

In related art, although a communication system incorporates a Network Data Analytics Function (NWDAF) to provide Artificial Intelligence (AI) capabilities, model training exists only in NWDAFs with logical functions, and NWDAFs with analysis requirements are the sole consumers of AI models. AI models can only be used for internal network data analysis such as network performance and congestion analysis, lacking network element functions for discovering and selecting AI models for mobile communication users. Moreover, the AI models involved are limited to data analysis types.

Therefore, the related art has defects such as inability to support providing AI models based on user requirements.

### SUMMARY

An objective of the present disclosure is to provide an information transmission method, apparatus, and device to solve the problem in related art of inability to support providing AI models based on user requirements.

To solve the above technical problem, one or more embodiments of the present disclosure provides an information transmission method, applied to a first core network device, the method including:
receiving an artificial intelligence (AI) model request message sent by a terminal;
sending, according to the AI model request message, an AI model policy query request for the terminal to a second core network device;
receiving an AI model policy query response for the terminal fed back by the second core network device; and
feeding back, according to the AI model policy query response, an AI model response message to the terminal; wherein the AI model response message carries AI model information.

Optionally, before receiving the AI model request message sent by the terminal, the method further includes:
receiving an AI model discovery message sent by the terminal; wherein the AI model discovery message carries artificial intelligence requirements description (AIRD) information;
determining AI service type information according to the AIRD information, and feeding back an AI model discovery response to the terminal.

Optionally, the AI model request message carries identification information of an AI service model requested by the terminal;
the feeding back, according to the AI model policy query response, an AI model response message to the terminal includes:
determining, according to the AI model policy query response and the identification information, whether the AI service model requested by the terminal is within a subscribed model range corresponding to the terminal, to obtain a first determination result;
obtaining AI model information according to the first determination result; and
feeding back the AI model response message to the terminal according to the AI model information.

Optionally, the obtaining AI model information according to the first determination result includes:
when the first determination result indicates that the AI service model requested by the terminal is not within the subscribed model range corresponding to the terminal, determining AI model information corresponding to the terminal according to the AI model request message, stored AI model information, and model policy information carried in the AI model policy query response.

Optionally, the AI model request message further carries overhead information; the overhead information includes at least one of: data type information, data size information, or data dimension information; the model policy information carried in the AI model policy query response includes: overhead limitation information;
the information transmission method further includes:
determining overhead information of an AI service corresponding to the AI model request message according to the overhead information; the overhead information includes at least one of: computation time information, computation resource overhead information, or storage resource overhead information;
the determining AI model information according to the AI model request message, locally stored AI model information, and the model policy information carried in the AI model policy query response when the first determination result indicates that the AI service model requested by the terminal is not within the subscribed model range corresponding to the terminal includes:
when the first determination result indicates a first situation, or when the first determination result indicates the first situation and the overhead information does not satisfy the overhead limitation information, determining AI model information according to the overhead information, the AI model request message, the locally stored AI model information, and the model policy information carried in the AI model policy query response;
wherein the first situation refers to a situation where the AI service model requested by the terminal is not within the subscribed model range corresponding to the terminal.

Optionally, the AI model request message carries artificial intelligence inference result requirements (AIRR) information; and the AI model policy query request carries the AIRR information and the AI service type information.

Optionally, the feeding back, according to the AI model policy query response, an AI model response message to the terminal includes:
determining AI model information according to candidate model information and the model policy information carried in the AI model policy query response; and
feeding back the AI model response message to the terminal according to the AI model information.

Optionally, the AI model request message further carries overhead information; the overhead information includes at least one of: data type information, data size information, or data dimension information; the model policy information carried in the AI model policy query response includes: overhead limitation information;
the information transmission method further includes:
determining overhead information of an AI service corresponding to the AI model request message according to the overhead information; the overhead information includes at least one of: computation time information, computation resource overhead information, or storage resource overhead information;
the determining AI model information according to the candidate model information and the model policy information carried in the AI model policy query response includes:
   determining AI model information according to the overhead information, the model policy information carried in the AI model policy query response, and the candidate model information.

Optionally, the feeding back, according to the AI model policy query response, an AI model response message to the terminal includes:
when the AI model policy query response indicates that model policy information corresponding to the terminal does not exist, sending an AI model training request to a third core network device; wherein the AI model training request carries the AI service type information and candidate AI model information;
receiving an AI model training response fed back by the third core network device;
determining AI model information according to the AI model training response; and
feeding back the AI model response message to the terminal according to the AI model information.

Optionally, the AI model request message further carries overhead information; the overhead information includes at least one of: data type information, data size information, or data dimension information; the model policy information carried in the AI model policy query response includes: overhead limitation information;
the information transmission method further includes:
determining overhead information of an AI service corresponding to the AI model request message according to the overhead information; the overhead information includes at least one of: computation time information, computation resource overhead information, or storage resource overhead information;
the determining AI model information according to the AI model training response includes:
   determining AI model information according to the overhead information and the AI model training response.

One or more embodiments of the present disclosure further provides an information transmission method, applied to a second core network device, the method including:
receiving an AI model policy query request for a terminal sent by a first core network device; and
feeding back, according to the AI model policy query request, an AI model policy query response for the terminal to the first core network device.

Optionally, the AI model policy query request carries a terminal identifier of the terminal;
the feeding back, according to the AI model policy query request, an AI model policy query response for the terminal to the first core network device includes:
feeding back the AI model policy query response for the terminal to the first core network device according to the terminal identifier.

Optionally, the AI model policy query request carries AIRR information and AI service type information;
the feeding back, according to the AI model policy query request, an AI model policy query response for the terminal to the first core network device includes:
determining whether an AI historical policy corresponding to the AI model policy query request exists according to the AIRR information and the AI service type information, to obtain a second determination result; and
feeding back the AI model policy query response for the terminal to the first core network device according to the second determination result.

Optionally, the feeding back the AI model policy query response for the terminal to the first core network device according to the second determination result includes:
when the second determination result indicates that the AI historical policy corresponding to the AI model policy query request exists, feeding back the AI model policy query response for the terminal to the first core network device according to the AI historical policy; wherein the AI historical policy includes: model policy information and candidate model information;
when the second determination result indicates that the AI historical policy corresponding to the AI model policy query request does not exist, feeding back to the first core network device an AI model policy query response for indicating that model policy information corresponding to the terminal does not exist.

One or more embodiments of the present disclosure further provides an information transmission method, applied to a terminal, the method including:
sending an AI model request message to a first core network device; and
receiving an AI model response message fed back by the first core network device; wherein the AI model response message carries AI model information.

Optionally, before sending the AI model request message to the first core network device, the method further includes:
sending an AI model discovery message to the first core network device; wherein the AI model discovery message carries AIRD information;
receiving an AI model discovery response fed back by the first core network device.

Optionally, the AI model request message carries identification information of an AI service model requested by the terminal; and/or
the AI model request message carries overhead information; the overhead information includes at least one of: data type information, data size information, or data dimension information; and/or
the AI model request message carries AIRR information.

One or more embodiments of the present disclosure further provides an information transmission method, applied to a third core network device, the method including:
receiving an AI model training request sent by a first core network device; wherein the AI model training request carries AI service type information and candidate AI model information; and
feeding back, according to the AI model training request, an AI model training response to the first core network device, and sending AI model training information corresponding to the AI model training request to a second core network device.

Optionally, the feeding back, according to the AI model training request, an AI model training response to the first core network device includes:
training a candidate AI model according to the AI service type information and the candidate AI model information, and obtaining an evaluation result; and
feeding back the AI model training response to the first core network device according to the evaluation result.

Optionally, the AI model training request further carries AIRR information;
the training a candidate AI model according to the AI service type information and the candidate AI model information, and obtaining an evaluation result includes:
training the candidate AI model according to the AI service type information and the candidate AI model information, to obtain a training result;
determining weights of evaluation metric according to the AIRR information; and
obtaining the evaluation result according to the weights and the training result.

One or more embodiments of the present disclosure further provides an information transmission device, wherein the information transmission device is a first core network device, the device including a memory, a transceiver, and a processor:
the memory is configured to store a computer program; the transceiver is configured to transmit and receive data under control of the processor; the processor is configured to read the computer program in the memory and perform the following operations:
receiving, through the transceiver, an AI model request message sent by a terminal;
sending, according to the AI model request message and through the transceiver, an AI model policy query request for the terminal to a second core network device;
receiving, through the transceiver, an AI model policy query response for the terminal fed back by the second core network device; and
feeding back, according to the AI model policy query response, an AI model response message to the terminal; wherein the AI model response message carries AI model information.

Optionally, the operations further include:
before receiving the AI model request message sent by the terminal, receiving, through the transceiver, an AI model discovery message sent by the terminal; wherein the AI model discovery message carries artificial intelligence requirements description (AIRD) information;
determining AI service type information according to the AIRD information, and feeding back, through the transceiver, an AI model discovery response to the terminal.

Optionally, the AI model request message carries identification information of an AI service model requested by the terminal;
the feeding back, according to the AI model policy query response, an AI model response message to the terminal includes:
determining, according to the AI model policy query response and the identification information, whether the AI service model requested by the terminal is within a subscribed model range corresponding to the terminal, to obtain a first determination result;
obtaining AI model information according to the first determination result; and
feeding back the AI model response message to the terminal according to the AI model information.

Optionally, the obtaining AI model information according to the first determination result includes:
when the first determination result indicates that the AI service model requested by the terminal is not within the subscribed model range corresponding to the terminal, determining AI model information corresponding to the terminal according to the AI model request message, stored AI model information, and model policy information carried in the AI model policy query response.

Optionally, the AI model request message further carries overhead information; the overhead information includes at least one of: data type information, data size information, or data dimension information; the model policy information carried in the AI model policy query response includes: overhead limitation information;
the operations further include:
determining overhead information of an AI service corresponding to the AI model request message according to the overhead information; the overhead information includes at least one of: computation time information, computation resource overhead information, or storage resource overhead information;
the determining AI model information according to the AI model request message, locally stored AI model information, and the model policy information carried in the AI model policy query response when the first determination result indicates that the AI service model requested by the terminal is not within the subscribed model range corresponding to the terminal includes:
   when the first determination result indicates a first situation, or when the first determination result indicates the first situation and the overhead information does not satisfy the overhead limitation information, determining AI model information according to the overhead information, the AI model request message, the locally stored AI model information, and the model policy information carried in the AI model policy query response;
   wherein the first situation refers to a situation where the AI service model requested by the terminal is not within the subscribed model range corresponding to the terminal.

Optionally, the AI model request message carries artificial intelligence inference result requirements (AIRR) information; and the AI model policy query request carries the AIRR information and the AI service type information.

Optionally, the feeding back, according to the AI model policy query response, an AI model response message to the terminal includes:
determining AI model information according to candidate model information and the model policy information carried in the AI model policy query response; and
feeding back the AI model response message to the terminal according to the AI model information.

Optionally, the AI model request message further carries overhead information; the overhead information includes at least one of: data type information, data size information, or data dimension information; the model policy information carried in the AI model policy query response includes: overhead limitation information;
the operations further include:
determining overhead information of an AI service corresponding to the AI model request message according to the overhead information; the overhead information includes at least one of: computation time information, computation resource overhead information, or storage resource overhead information;
the determining AI model information according to the candidate model information and the model policy information carried in the AI model policy query response includes:
   determining AI model information according to the overhead information, the model policy information carried in the AI model policy query response, and the candidate model information.

Optionally, the feeding back, according to the AI model policy query response, an AI model response message to the terminal includes:
when the AI model policy query response indicates that model policy information corresponding to the terminal does not exist, sending, through the transceiver, an AI model training request to a third core network device; wherein the AI model training request carries the AI service type information and candidate AI model information;
receiving, through the transceiver, an AI model training response fed back by the third core network device;
determining AI model information according to the AI model training response; and
feeding back the AI model response message to the terminal according to the AI model information.

Optionally, the AI model request message further carries overhead information; the overhead information includes at least one of: data type information, data size information, or data dimension information; the model policy information carried in the AI model policy query response includes: overhead limitation information;
the operations further include:
determining overhead information of an AI service corresponding to the AI model request message according to the overhead information; the overhead information includes at least one of: computation time information, computation resource overhead information, or storage resource overhead information;
the determining AI model information according to the AI model training response includes:
   determining AI model information according to the overhead information and the AI model training response.

One or more embodiments of the present disclosure further provides an information transmission device, wherein the information transmission device is a second core network device, including a memory, a transceiver, and a processor:
the memory is configured to store a computer program; the transceiver is configured to transmit and receive data under control of the processor; the processor is configured to read the computer program in the memory and perform the following operations:
receiving, through the transceiver, an AI model policy query request for a terminal sent by a first core network device; and
feeding back, according to the AI model policy query request, an AI model policy query response for the terminal to the first core network device.

Optionally, the AI model policy query request carries a terminal identifier of the terminal;
the feeding back, according to the AI model policy query request, an AI model policy query response for the terminal to the first core network device includes:
feeding back the AI model policy query response for the terminal to the first core network device according to the terminal identifier.

Optionally, the AI model policy query request carries AIRR information and AI service type information;
the feeding back, according to the AI model policy query request, an AI model policy query response for the terminal to the first core network device includes:
determining whether an AI historical policy corresponding to the AI model policy query request exists according to the AIRR information and the AI service type information, to obtain a second determination result; and
feeding back the AI model policy query response for the terminal to the first core network device according to the second determination result.

Optionally, the feeding back the AI model policy query response for the terminal to the first core network device according to the second determination result includes:
when the second determination result indicates that the AI historical policy corresponding to the AI model policy query request exists, feeding back the AI model policy query response for the terminal to the first core network device according to the AI historical policy; wherein the AI historical policy includes: model policy information and candidate model information;
when the second determination result indicates that the AI historical policy corresponding to the AI model policy query request does not exist, feeding back to the first core network device an AI model policy query response for indicating that model policy information corresponding to the terminal does not exist.

One or more embodiments of the present disclosure further provides an information transmission device, wherein the information transmission device is a terminal, including a memory, a transceiver, and a processor:
the memory is configured to store a computer program; the transceiver is configured to transmit and receive data under control of the processor; the processor is configured to read the computer program in the memory and perform the following operations:
sending, through the transceiver, an AI model request message to a first core network device; and
receiving, through the transceiver, an AI model response message fed back by the first core network device; wherein the AI model response message carries AI model information.

Optionally, the operations further include:
before sending the AI model request message to the first core network device, sending, through the transceiver, an AI model discovery message to the first core network device; wherein the AI model discovery message carries AIRD information;
receiving, through the transceiver, an AI model discovery response fed back by the first core network device.

Optionally, the AI model request message carries identification information of an AI service model requested by the terminal; and/or
the AI model request message carries overhead information; the overhead information includes at least one of: data type information, data size information, or data dimension information; and/or
the AI model request message carries AIRR information.

One or more embodiments of the present disclosure further provides an information transmission device, wherein the information transmission device is a third core network device, the device including a memory, a transceiver, and a processor:
the memory is configured to store a computer program; the transceiver is configured to transmit and receive data under control of the processor; the processor is configured to read the computer program in the memory and perform the following operations:
receiving, through the transceiver, an AI model training request sent by a first core network device; wherein the AI model training request carries AI service type information and candidate AI model information; and
feeding back, according to the AI model training request, an AI model training response to the first core network device, and sending, through the transceiver, AI model training information corresponding to the AI model training request to a second core network device.

Optionally, the feeding back, according to the AI model training request, an AI model training response to the first core network device includes:
training a candidate AI model according to the AI service type information and the candidate AI model information, and obtaining an evaluation result; and
feeding back the AI model training response to the first core network device according to the evaluation result.

Optionally, the AI model training request further carries AIRR information;
the training a candidate AI model according to the AI service type information and the candidate AI model information, and obtaining an evaluation result includes:
training the candidate AI model according to the AI service type information and the candidate AI model information, to obtain a training result;
determining weights of evaluation metric according to the AIRR information; and
obtaining the evaluation result according to the weights and the training result.

One or more embodiments of the present disclosure further provides an information transmission apparatus, applied to a first core network device, the apparatus including:
a first receiving unit, configured to receive an AI model request message sent by a terminal;
a first sending unit, configured to send, according to the AI model request message, an AI model policy query request for the terminal to a second core network device;
a second receiving unit, configured to receive an AI model policy query response for the terminal fed back by the second core network device; and
a first feedback unit, configured to feed back, according to the AI model policy query response, an AI model response message to the terminal; wherein the AI model response message carries AI model information.

Optionally, the apparatus further includes:
a third receiving unit, configured to, before receiving the AI model request message sent by the terminal, receive an AI model discovery message sent by the terminal; wherein the AI model discovery message carries artificial intelligence requirements description (AIRD) information;
a first processing unit, configured to determine AI service type information according to the AIRD information, and feed back an AI model discovery response to the terminal.

Optionally, the AI model request message carries identification information of an AI service model requested by the terminal;
the feeding back, according to the AI model policy query response, an AI model response message to the terminal includes:
determining, according to the AI model policy query response and the identification information, whether the AI service model requested by the terminal is within a subscribed model range corresponding to the terminal, to obtain a first determination result;
obtaining AI model information according to the first determination result; and
feeding back the AI model response message to the terminal according to the AI model information.

Optionally, the obtaining AI model information according to the first determination result includes:
when the first determination result indicates that the AI service model requested by the terminal is not within the subscribed model range corresponding to the terminal, determining AI model information corresponding to the terminal according to the AI model request message, stored AI model information, and model policy information carried in the AI model policy query response.

Optionally, the AI model request message further carries overhead information; the overhead information includes at least one of: data type information, data size information, or data dimension information; the model policy information carried in the AI model policy query response includes: overhead limitation information;
the information transmission apparatus further includes:
a first determining unit, configured to determine overhead information of an AI service corresponding to the AI model request message according to the overhead information; the overhead information includes at least one of: computation time information, computation resource overhead information, or storage resource overhead information;
the determining AI model information according to the AI model request message, locally stored AI model information, and the model policy information carried in the AI model policy query response when the first determination result indicates that the AI service model requested by the terminal is not within the subscribed model range corresponding to the terminal includes:
   when the first determination result indicates a first situation, or when the first determination result indicates the first situation and the overhead information does not satisfy the overhead limitation information, determining AI model information according to the overhead information, the AI model request message, the locally stored AI model information, and the model policy information carried in the AI model policy query response;
   wherein the first situation refers to a situation where the AI service model requested by the terminal is not within the subscribed model range corresponding to the terminal.

Optionally, the AI model request message carries artificial intelligence inference result requirements (AIRR) information; and the AI model policy query request carries the AIRR information and the AI service type information.

Optionally, the feeding back, according to the AI model policy query response, an AI model response message to the terminal includes:
determining AI model information according to candidate model information and the model policy information carried in the AI model policy query response; and
feeding back the AI model response message to the terminal according to the AI model information.

Optionally, the AI model request message further carries overhead information; the overhead information includes at least one of: data type information, data size information, or data dimension information; the model policy information carried in the AI model policy query response includes: overhead limitation information;
the information transmission apparatus further includes:
a second determining unit, configured to determine overhead information of an AI service corresponding to the AI model request message according to the overhead information; the overhead information includes at least one of: computation time information, computation resource overhead information, or storage resource overhead information;
the determining AI model information according to the candidate model information and the model policy information carried in the AI model policy query response includes:
   determining AI model information according to the overhead information, the model policy information carried in the AI model policy query response, and the candidate model information.

Optionally, the feeding back, according to the AI model policy query response, an AI model response message to the terminal includes:
when the AI model policy query response indicates that model policy information corresponding to the terminal does not exist, sending an AI model training request to a third core network device; wherein the AI model training request carries the AI service type information and candidate AI model information;
receiving an AI model training response fed back by the third core network device;
determining AI model information according to the AI model training response; and
feeding back the AI model response message to the terminal according to the AI model information.

Optionally, the AI model request message further carries overhead information; the overhead information includes at least one of: data type information, data size information, or data dimension information; the model policy information carried in the AI model policy query response includes: overhead limitation information;
the information transmission apparatus further includes:
a third determining unit, configured to determine overhead information of an AI service corresponding to the AI model request message according to the overhead information; the overhead information includes at least one of: computation time information, computation resource overhead information, or storage resource overhead information;
the determining AI model information according to the AI model training response includes:
   determining AI model information according to the overhead information and the AI model training response.

One or more embodiments of the present disclosure further provides an information transmission apparatus, applied to a second core network device, including:
a fourth receiving unit, configured to receive an AI model policy query request for a terminal sent by a first core network device; and
a second feedback unit, configured to feed back, according to the AI model policy query request, an AI model policy query response for the terminal to the first core network device.

Optionally, the AI model policy query request carries a terminal identifier of the terminal;
the feeding back, according to the AI model policy query request, an AI model policy query response for the terminal to the first core network device includes:
feeding back the AI model policy query response for the terminal to the first core network device according to the terminal identifier.

Optionally, the AI model policy query request carries AIRR information and AI service type information;
the feeding back, according to the AI model policy query request, an AI model policy query response for the terminal to the first core network device includes:
determining whether an AI historical policy corresponding to the AI model policy query request exists according to the AIRR information and the AI service type information, to obtain a second determination result; and
feeding back the AI model policy query response for the terminal to the first core network device according to the second determination result.

Optionally, the feeding back the AI model policy query response for the terminal to the first core network device according to the second determination result includes:
when the second determination result indicates that the AI historical policy corresponding to the AI model policy query request exists, feeding back the AI model policy query response for the terminal to the first core network device according to the AI historical policy; wherein the AI historical policy includes: model policy information and candidate model information;
when the second determination result indicates that the AI historical policy corresponding to the AI model policy query request does not exist, feeding back to the first core network device an AI model policy query response for indicating that model policy information corresponding to the terminal does not exist.

One or more embodiments of the present disclosure further provides an information transmission apparatus, applied to a terminal, the apparatus including:
a second sending unit, configured to send an AI model request message to a first core network device; and
a fifth receiving unit, configured to receive an AI model response message fed back by the first core network device; wherein the AI model response message carries AI model information.

Optionally, the apparatus further includes:
a third sending unit, configured to, before sending the AI model request message to the first core network device, send an AI model discovery message to the first core network device; wherein the AI model discovery message carries AIRD information;
a sixth receiving unit, configured to receive an AI model discovery response fed back by the first core network device.

Optionally, the AI model request message carries identification information of an AI service model requested by the terminal; and/or
the AI model request message carries overhead information; the overhead information includes at least one of: data type information, data size information, or data dimension information; and/or
the AI model request message carries AIRR information.

One or more embodiments of the present disclosure further provides an information transmission apparatus, applied to a third core network device, the apparatus including:
a seventh receiving unit, configured to receive an AI model training request sent by a first core network device; wherein the AI model training request carries AI service type information and candidate AI model information; and
a third feedback unit, configured to feed back, according to the AI model training request, an AI model training response to the first core network device, and send AI model training information corresponding to the AI model training request to a second core network device.

Optionally, the feeding back, according to the AI model training request, an AI model training response to the first core network device includes:
training a candidate AI model according to the AI service type information and the candidate AI model information, and obtaining an evaluation result; and
feeding back the AI model training response to the first core network device according to the evaluation result.

Optionally, the AI model training request further carries AIRR information;
the training a candidate AI model according to the AI service type information and the candidate AI model information, and obtaining an evaluation result includes:
training the candidate AI model according to the AI service type information and the candidate AI model information, to obtain a training result;
determining weights of evaluation metric according to the AIRR information; and
obtaining the evaluation result according to the weights and the training result.

One or more embodiments of the present disclosure further provides a non-transitory readable storage medium. The non-transitory readable storage medium stores a computer program. The computer program is used to cause a processor to perform the method on the first core network device side, the second core network device side, the terminal side, or the third core network device side described above.

The beneficial effects of the above technical solutions of the present disclosure are as follows.

In the above solutions, the information transmission method receives an AI model request message sent by a terminal; sends, according to the AI model request message, an AI model policy query request for the terminal to a second core network device; receives an AI model policy query response for the terminal fed back by the second core network device; and feeds back, according to the AI model policy query response, an AI model response message to the terminal; wherein the AI model response message carries AI model information. This can support providing corresponding AI model information to the terminal according to the AI model request message, thereby supporting providing AI models based on user requirements, and effectively solves the problem in related art of inability to support providing AI models based on user requirements.

### BRIEF DESCRIPTION OF THE DRAWINGS

FIG. 1 is a schematic diagram of a wireless communication system architecture according to one or more embodiments of the present disclosure;
FIG. 2 is a schematic diagram of a machine learning model provision architecture according to one or more embodiments of the present disclosure;
FIG. 3 is a first schematic flow diagram of an information transmission method according to one or more embodiments of the present disclosure;
FIG. 4 is a second schematic flow diagram of an information transmission method according to one or more embodiments of the present disclosure;
FIG. 5 is a third schematic flow diagram of an information transmission method according to one or more embodiments of the present disclosure;
FIG. 6 is a fourth schematic flow diagram of an information transmission method according to one or more embodiments of the present disclosure;
FIG. 7 is a schematic diagram of a network element architecture according to one or more embodiments of the present disclosure;
FIG. 8 is a first schematic diagram of a specific implementation architecture of an information transmission method according to one or more embodiments of the present disclosure;
FIG. 9 is a first schematic flow diagram of a specific implementation of an information transmission method according to one or more embodiments of the present disclosure;
FIG. 10 is a second schematic diagram of a specific implementation architecture of an information transmission method according to one or more embodiments of the present disclosure;
FIG. 11 is a second schematic flow diagram of a specific implementation of an information transmission method according to one or more embodiments of the present disclosure;
FIG. 12 is a third schematic diagram of a specific implementation architecture of an information transmission method according to one or more embodiments of the present disclosure;
FIG. 13 is a third schematic flow diagram of a specific implementation of an information transmission method according to one or more embodiments of the present disclosure;
FIG. 14 is a first schematic structural diagram of an information transmission device according to one or more embodiments of the present disclosure;
FIG. 15 is a second schematic structural diagram of an information transmission device according to one or more embodiments of the present disclosure;
FIG. 16 is a third schematic structural diagram of an information transmission device according to one or more embodiments of the present disclosure;
FIG. 17 is a fourth schematic structural diagram of an information transmission device according to one or more embodiments of the present disclosure;
FIG. 18 is a first schematic structural diagram of an information transmission apparatus according to one or more embodiments of the present disclosure;
FIG. 19 is a second schematic structural diagram of an information transmission apparatus according to one or more embodiments of the present disclosure;
FIG. 20 is a third schematic structural diagram of an information transmission apparatus according to one or more embodiments of the present disclosure;
FIG. 21 is a fourth schematic structural diagram of an information transmission apparatus according to one or more embodiments of the present disclosure.

### DETAILED DESCRIPTION

The technical solutions in the embodiments of the present disclosure will be clearly and completely described below with reference to the accompanying drawings in the embodiments of the present disclosure. Apparently, the described embodiments are only a part of the embodiments of the present disclosure, rather than all the embodiments. Based on the embodiments in the present disclosure, all other embodiments obtained by those of ordinary skill in the art without creative efforts shall fall within the protection scope of the present disclosure.

The term "and/or" in the embodiments of the present disclosure describes an association relationship between associated objects, indicating that there may be three relationships, for example, A and/or B may indicate: A exists alone, A and B exist simultaneously, and B exists alone. The character "/" generally indicates that the associated objects before and after it are in an "or" relationship.

The term "plurality" in the embodiments of the present disclosure refers to two or more, and other quantifiers are similar.

It is noted that the technical solutions provided by the embodiments of the present disclosure may be applicable to various systems, especially the 5th Generation (5G) system. For example, applicable systems may include the Global System of Mobile communication (GSM) system, Code Division Multiple Access (CDMA) system, Wideband Code Division Multiple Access (WCDMA) General Packet Radio Service (GPRS) system, Long Term Evolution (LTE) system, LTE Frequency Division Duplex (FDD) system, LTE Time Division Duplex (TDD) system, Long Term Evolution Advanced (LTE-A) system, Universal Mobile Telecommunication System (UMTS), Worldwide Interoperability for Microwave Access (WiMAX) system, 5G New Radio (NR) system, etc. These various systems all include terminal devices and network devices. The systems may also include core network parts, such as the Evolved Packet System (EPS), 5G System (5GS), etc.

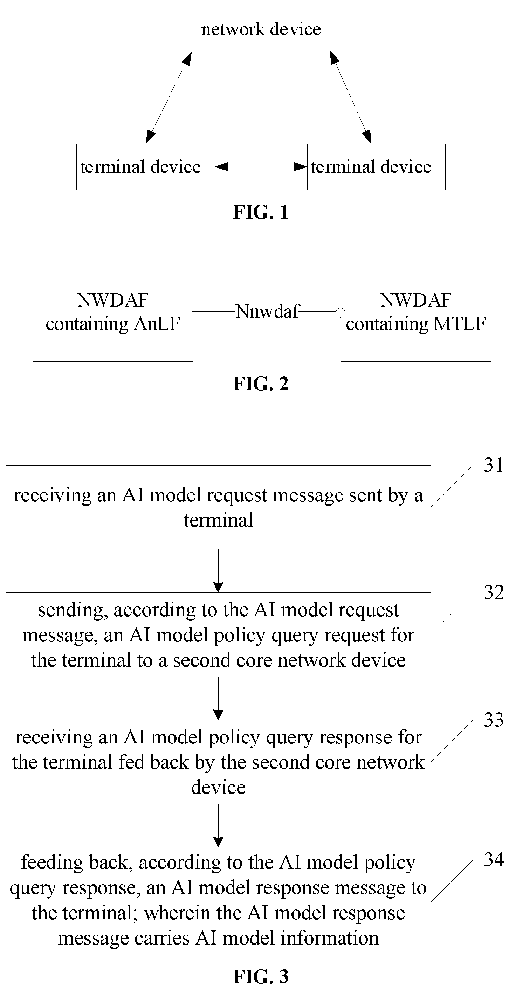

FIG. 1 shows a block diagram of a wireless communication system to which embodiments of the present disclosure may be applied. The wireless communication system includes a terminal device (which may be simply referred to as a terminal) and a network device.

The terminal device involved in the embodiments of the present disclosure may refer to a device that provides voice and/or data connectivity to a user, a handheld device with wireless connection functions, or other processing devices connected to a wireless modem. In different systems, the names of terminal devices may also be different. For example, in a 5G system, a terminal device may be called User Equipment (UE). A wireless terminal device may communicate with one or more Core Networks (CN) through a Radio Access Network (RAN). The wireless terminal device may be a mobile terminal device, such as a mobile phone (or called a "cellular" phone) and a computer with a mobile terminal device. For example, it may be a portable, pocket-sized, handheld, computer-built-in, or vehicle-mounted mobile device that exchanges voice and/or data with a radio access network. For example, Personal Communication Service (PCS) phones, cordless phones, Session Initiated Protocol (SIP) phones, Wireless Local Loop (WLL) stations, Personal Digital Assistants (PDAs), and other devices. A wireless terminal device may also be called a system, subscriber unit, subscriber station, mobile station, mobile, remote station, access point, remote terminal, access terminal, user terminal, user agent, user device, which is not limited in the embodiments of the present disclosure.

The network device involved in the embodiments of the present disclosure may be a base station, which may include multiple cells serving terminals. According to different specific application scenarios, the base station may also be called an access point, or may be a device in an access network that communicates with a wireless terminal device through one or more sectors on an air interface, or other names. The network device may be used to mutually convert received air frames and Internet Protocol (IP) packets, and serve as a router between the wireless terminal device and the rest of the access network, wherein the rest of the access network may include an Internet Protocol (IP) communication network. The network device may also coordinate attribute management of the air interface. For example, the network device involved in the embodiments of the present disclosure may be a Base Transceiver Station (BTS) in the Global System for Mobile communications (GSM) or Code Division Multiple Access (CDMA), or may be a network device (NodeB) in Wide-band Code Division Multiple Access (WCDMA), or may be an evolutional network device (evolutional NodeB, eNB or e-NodeB) in a Long Term Evolution (LTE) system, a 5G base station (the next Generation Node B, gNB) in a 5G network architecture (next generation system), or may be a Home evolved Node B (HeNB), relay node, femto, pico, etc., which is not limited in the embodiments of the present disclosure. In some network structures, the network device may include a Centralized Unit (CU) node and a Distributed Unit (DU) node, and the centralized unit and distributed unit may also be geographically separated.

Between the network device and the terminal device, one or more antennas may be used for Multi-Input Multi-Output (MIMO) transmission. MIMO transmission may be Single User MIMO (SU-MIMO) or Multiple User MIMO (MU-MIMO). According to the morphology and number of antenna combinations, MIMO transmission may be two-dimensional MIMO (2D-MIMO), three-dimensional MIMO (3D-MIMO), Full Dimension MIMO (FD-MIMO), or massive-MIMO, or may be diversity transmission, precoding transmission, or beamforming transmission, etc.

First, the content involved in the solutions provided by the embodiments of the present disclosure will be introduced below.

The organic combination of the 6th Generation (6G) network and Artificial Intelligence (AI) is a future development trend. To achieve the vision of 6G, the assistance of AI is indispensable. Therefore, 6G mobile communication networks need to consider deep coupling with AI at the design stage. The native intelligence of 6G requires the network to be able to provide intelligent and inclusive AI capabilities. The provided AI models should not only be used for the network itself, but also provide AI model discovery capabilities to provide AI services for mobile communication users. At the same time, on-demand selection of AI models is very important, which determines the resource consumption and performance of AI models in solving AI services. Currently, AI services in 5G communication systems are still limited to the network itself and cannot select AI models according to requirements.

The AI capabilities and models of the 5G system are introduced as follows:
The current 5G mobile communication system network architecture is designed with connection and data transmission as the center. The 5G communication system adds a Network Data Analytics Function (NWDAF), which is used to collect data generated by 5G core network functions and provide AI data analysis capabilities about the network including network service experience, network performance, slice load, network function load, terminal mobility, etc.

In terms of architecture, the NWDAF can be decomposed into an NWDAF containing a Model Training Logical Function (MTLF) and an Analytics Logical Function (AnLF). Multiple NWDAFs can share, synthesize, and transfer analysis data.

Specifically, as shown in FIG. 2 (trained machine learning model provision architecture), the 5G system architecture allows an NWDAF containing an Analytics Logical Function (AnLF) to use AI models from another NWDAF containing a Model Training Logical Function (MTLF) to provide AI services. The NWDAF containing AnLF may use the Nnwdaf interface to request and select AI models to provide services.

In addition, the 5G communication system does not consider specific methods and processes for selecting AI models under different AI service requirements and service types. Specifically, the existing 5G architecture does not consider integration with AI and cannot provide flexible AI model selection for multiple types of AI services. The existing 6G endogenous intelligence architecture still fails to achieve AI model discovery and decision-making for on-demand AI model selection based on user-provided data and requirements.

Based on the above, one or more embodiments of the present disclosure provides an information transmission method, apparatus, and device to solve the problem in related art of inability to support providing AI models based on user requirements. The method, apparatus, and device are based on the same application concept. Since the principles of solving problems by the method, apparatus, and device are similar, the implementations of the method, apparatus, and device can refer to each other, and repeated parts will not be described again.

The information transmission method provided by the embodiment of the present disclosure, applied to a first core network device, as shown in FIG. 3, comprises:
Step 31: receiving an AI model request message sent by a terminal;
Step 32: sending, according to the AI model request message, an AI model policy query request for the terminal to a second core network device;
Step 33: receiving an AI model policy query response for the terminal fed back by the second core network device; and
Step 34: feeding back, according to the AI model policy query response, an AI model response message to the terminal; wherein the AI model response message carries AI model information.

The first core network device may be implemented as an AI Evaluation and Selection Function (AIESF) device, and/or, the AI model request message may carry a terminal identifier (UE ID) of the terminal, and/or, the second core network device may be implemented as a Policy Control Function (PCF) device, and/or, the AI model policy query request may carry the terminal identifier (UE ID) of the terminal, and/or, the AI model information may include: AI Model ID, AI model accuracy, estimated training time, etc., but is not limited thereto.

The information transmission method provided by this embodiment of the present disclosure receives an AI model request message sent by a terminal; sends, according to the AI model request message, an AI model policy query request for the terminal to a second core network device; receives an AI model policy query response for the terminal fed back by the second core network device; and feeds back, according to the AI model policy query response, an AI model response message to the terminal; wherein the AI model response message carries AI model information. This can support providing corresponding AI model information to the terminal according to the AI model request message, thereby supporting providing AI models based on user requirements; and effectively solves the problem in related art of inability to support providing AI models based on user requirements.

Further, before receiving the AI model request message sent by the terminal, the method further comprises: receiving an AI model discovery message sent by the terminal; wherein the AI model discovery message carries Artificial Intelligence Requirements Description (AIRD) information; determining AI service type information according to the AIRD information, and feeding back an AI model discovery response to the terminal.

This can first clarify the AI service type information for subsequent use. The AI model discovery response may carry AI service type information, but is not limited thereto.

This solution may specifically include three situations: Situation 1, the terminal specifies an AI model; Situation 2, the terminal does not specify an AI model, but the second core network device stores a corresponding AI policy (i.e., model policy information corresponding to the terminal); Situation 3, the terminal does not specify an AI model, and the second core network device also does not store a corresponding AI policy; these will be introduced separately below:

For Situation 1, the AI model request message carries identification information of an AI service model requested by the terminal; the feeding back, according to the AI model policy query response, an AI model response message to the terminal comprises: determining, according to the AI model policy query response and the identification information, whether the AI service model requested by the terminal is within a subscribed model range corresponding to the terminal, to obtain a first determination result; obtaining AI model information according to the first determination result; and feeding back the AI model response message to the terminal according to the AI model information.

This can accurately feed back the AI model response message to the terminal; wherein the identification information may correspond to the AI service type information, and/or, the obtaining AI model information according to the first determination result may include: when the first determination result indicates that the AI service model requested by the terminal is within the subscribed model range corresponding to the terminal, directly obtaining corresponding AI model information according to the identification information of the AI service model requested by the terminal; and/or, the AI model request message carries Artificial Intelligence Inference Result Requirements (AIRR) information (AIRR may serve as model performance expected by the terminal, for example, expecting the model accuracy to reach above 95%, even if the terminal specifies an AI type in Situation 1, there may also be performance requirements), wherein the "determining, according to the AI model policy query response and the identification information, whether the AI service model requested by the terminal is within a subscribed model range corresponding to the terminal, to obtain a first determination result" may include: when it is determined according to the AI model policy query response that the AI service model requested by the terminal satisfies the AIRR information, determining, according to the AI model policy query response and the identification information, whether the AI service model requested by the terminal is within a subscribed model range corresponding to the terminal, to obtain a first determination result; further, this solution may also include: when it is determined according to the AI model policy query response that the AI service model requested by the terminal satisfies the AIRR information, executing the specific operations of "feeding back, according to the AI model policy query response, an AI model response message to the terminal" corresponding to Situation 2 or 3 below, but is not limited thereto.

The obtaining AI model information according to the first determination result includes: when the first determination result indicates that the AI service model requested by the terminal is not within the subscribed model range corresponding to the terminal, determining AI model information corresponding to the terminal according to the AI model request message, stored AI model information, and model policy information carried in the AI model policy query response.

This can support accurately obtaining AI model information in the above situation. The "stored AI model information" may be locally stored or stored in a third core network device, which is not limited herein.

In this embodiment of the present disclosure, the AI model request message further carries overhead information; the overhead information includes at least one of: data type information, data size information, or data dimension information; the model policy information carried in the AI model policy query response includes: overhead limitation information; the information transmission method further includes: determining overhead information of an AI service corresponding to the AI model request message according to the overhead information; the overhead information includes at least one of: computation time information, computation resource overhead information, or storage resource overhead information; the determining AI model information according to the AI model request message, locally stored AI model information, and the model policy information carried in the AI model policy query response when the first determination result indicates that the AI service model requested by the terminal is not within the subscribed model range corresponding to the terminal includes: when the first determination result indicates a first situation, or when the first determination result indicates the first situation and the overhead information does not satisfy the overhead limitation information, determining AI model information according to the overhead information, the AI model request message, the locally stored AI model information, and the model policy information carried in the AI model policy query response; wherein the first situation refers to a situation where the AI service model requested by the terminal is not within the subscribed model range corresponding to the terminal.

This can obtain AI model information of an AI model that better meets requirements.

For Situation 2 and 3, the AI model request message carries Artificial Intelligence Inference Result Requirements (AIRR) information; and the AI model policy query request carries the AIRR information and the AI service type information.

This can facilitate support for obtaining AI models that better meet terminal requirements.

For Situation 2, the feeding back, according to the AI model policy query response, an AI model response message to the terminal includes: determining AI model information according to the candidate model information and the model policy information carried in the AI model policy query response; and feeding back the AI model response message to the terminal according to the AI model information.

This can accurately perform feedback of the AI model response message.

Further, the AI model request message further carries overhead information; the overhead information includes at least one of: data type information, data size information, or data dimension information; the model policy information carried in the AI model policy query response includes: overhead limitation information; the information transmission method further includes: determining overhead information of an AI service corresponding to the AI model request message according to the overhead information; the overhead information includes at least one of: computation time information, computation resource overhead information, or storage resource overhead information; the determining AI model information according to the candidate model information and the model policy information carried in the AI model policy query response includes: determining AI model information according to the overhead information, the model policy information carried in the AI model policy query response, and the candidate model information.

This can obtain AI model information of an AI model that better meets requirements. The method may further include: extracting data features according to the overhead information; correspondingly, the sending, according to the AI model request message, an AI model policy query request for the terminal to a second core network device includes: sending, according to the AI model request message and the data features, an AI model policy query request for the terminal to a second core network device; but is not limited thereto.

For Situation 3, the feeding back, according to the AI model policy query response, an AI model response message to the terminal includes: when the AI model policy query response indicates that model policy information corresponding to the terminal does not exist, sending an AI model training request to a third core network device; wherein the AI model training request carries the AI service type information and candidate AI model information; receiving an AI model training response fed back by the third core network device; determining AI model information according to the AI model training response; and feeding back the AI model response message to the terminal according to the AI model information.

This can also support accurately performing feedback of the AI model response message. The "situation where the AI model policy query response indicates that model policy information corresponding to the terminal does not exist" may be understood as: no AI model matching the AI model request message is retrieved; and/or, the third core network device may be implemented as an AI Model Storage Function (AIMSF) device, and/or, the AI model training request may further carry AIRR information, and the third core network device operates accordingly; and/or, the candidate AI model information may be obtained according to the correspondence relationship (such as a relationship table) among "AI service type-AI service model-evaluation metric", but is not limited thereto.

Further, the AI model request message further carries overhead information; the overhead information includes at least one of: data type information, data size information, or data dimension information; the model policy information carried in the AI model policy query response includes: overhead limitation information; the information transmission method further includes: determining overhead information of an AI service corresponding to the AI model request message according to the overhead information; the overhead information includes at least one of: computation time information, computation resource overhead information, or storage resource overhead information; the determining AI model information according to the AI model training response includes: determining AI model information according to the overhead information and the AI model training response.

This can obtain AI model information of an AI model that better meets requirements. The determining AI model information according to the overhead information and the AI model training response may include: determining AI model information according to the overhead information, the AI model training response, and AIRR, but is not limited thereto.

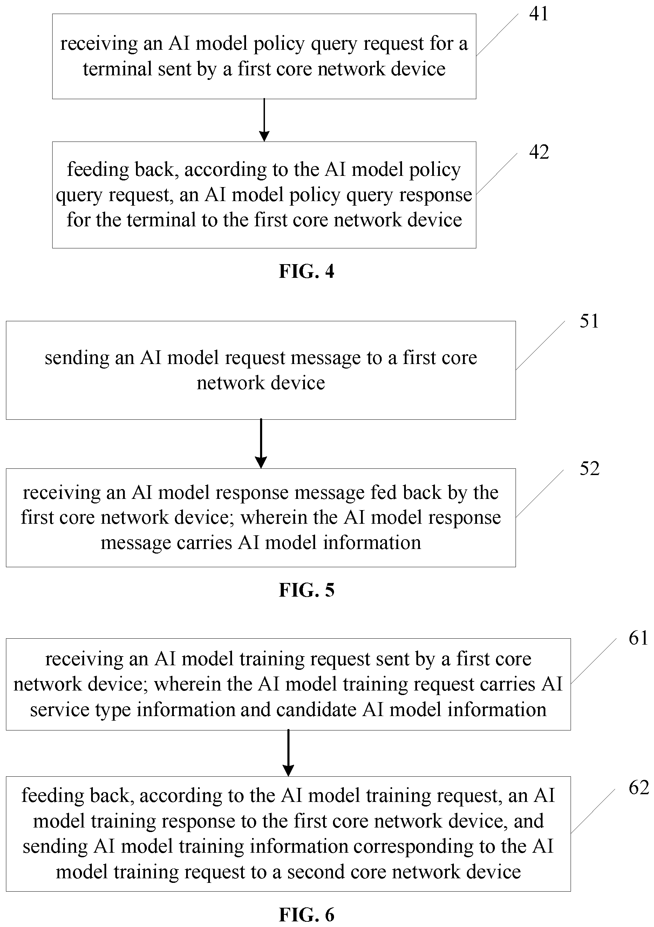

One or more embodiments of the present disclosure further provide an information transmission method, applied to a second core network device, as shown in FIG. 4, including:
Step 41: receiving an AI model policy query request for a terminal sent by a first core network device;
Step 42: feeding back, according to the AI model policy query request, an AI model policy query response for the terminal to the first core network device.

The first core network device may be implemented as an AI Evaluation and Selection Function (AIESF) device, and/or, the second core network device may be implemented as a Policy Control Function (PCF) device, and/or, the AI model policy query request may carry a terminal identifier (UE ID) of the terminal, but is not limited thereto.

The information transmission method provided by this embodiment of the present disclosure receives an AI model policy query request for a terminal sent by a first core network device; and feeds back, according to the AI model policy query request, an AI model policy query response for the terminal to the first core network device. This can support providing AI model information corresponding to an AI model request message to the terminal, thereby supporting providing AI models based on user requirements; and effectively solves the problem in related art of inability to support providing AI models based on user requirements.

This solution may specifically include three situations. Situation 1, the terminal specifies an AI model. Situation 2, the terminal does not specify an AI model, but the second core network device stores a corresponding AI policy (i.e., model policy information corresponding to the terminal). Situation 3, the terminal does not specify an AI model, and the second core network device also does not store a corresponding AI policy. These will be introduced separately below:
For Situation 1, Situation 2, and/or Situation 3, the AI model policy query request carries a terminal identifier of the terminal. The feeding back, according to the AI model policy query request, an AI model policy query response for the terminal to the first core network device includes: feeding back the AI model policy query response for the terminal to the first core network device according to the terminal identifier.

This can accurately feed back the AI model policy query response for the terminal.

For Situation 2 and 3, the AI model policy query request carries AIRR information and AI service type information. The feeding back, according to the AI model policy query request, an AI model policy query response for the terminal to the first core network device includes: determining whether an AI historical policy corresponding to the AI model policy query request exists according to the AIRR information and the AI service type information, to obtain a second determination result; and feeding back the AI model policy query response for the terminal to the first core network device according to the second determination result.

This can obtain AI models meeting terminal requirements when the user does not specify an AI model, and accurately perform feedback of the AI model policy query response.

The feeding back the AI model policy query response for the terminal to the first core network device according to the second determination result includes: (1) when the second determination result indicates that the AI historical policy corresponding to the AI model policy query request exists, feeding back the AI model policy query response for the terminal to the first core network device according to the AI historical policy; wherein the AI historical policy includes: model policy information and candidate model information; (2) when the second determination result indicates that the AI historical policy corresponding to the AI model policy query request does not exist, feeding back to the first core network device an AI model policy query response for indicating that model policy information corresponding to the terminal does not exist.

This can accurately obtain the AI model policy query response for the terminal for Situation 2 or 3 above. The "indicating that model policy information corresponding to the terminal does not exist" may be understood as: no AI model matching the AI model request message initiated by the terminal is retrieved, but is not limited thereto. The model policy information may include overhead information of AI models for various AI services, such as computation resource overhead information, storage resource overhead information, etc., which is not limited herein.

One or more embodiments of the present disclosure further provide an information transmission method, applied to a terminal, as shown in FIG. 5, including:
Step 51: sending an AI model request message to a first core network device;
Step 52: receiving an AI model response message fed back by the first core network device; wherein the AI model response message carries AI model information.

The first core network device may be implemented as an AI Evaluation and Selection Function (AIESF) device, and/or, the AI model request message may carry a terminal identifier (UE ID) of the terminal, and/or, the AI model information may include at least one of: AI Model ID, AI model accuracy, estimated training time, etc., and/or, Step 51 may include: sending an AI model request message to a first core network device according to AI service type information; and/or, after Step 52, the method may further include: executing a generated AI service using a corresponding AI model according to the AI model information, but is not limited thereto.

The information transmission method provided by this embodiment of the present disclosure sends an AI model request message to a first core network device; and receives an AI model response message fed back by the first core network device; wherein the AI model response message carries AI model information. This can support obtaining AI model information corresponding to an AI model request message, thereby supporting providing AI models based on user requirements; and effectively solves the problem in related art of inability to support providing AI models based on user requirements.

Further, before sending the AI model request message to the first core network device, the method further includes: sending an AI model discovery message to the first core network device; wherein the AI model discovery message carries AIRD information; and receiving an AI model discovery response fed back by the first core network device.

This can enable the first core network device to first clarify the AI service type information for subsequent use. The AI model discovery response may carry AI service type information, but is not limited thereto.

The AI model request message carries identification information of an AI service model requested by the terminal; and/or, the AI model request message carries overhead information; the overhead information includes at least one of: data type information, data size information, or data dimension information; and/or, the AI model request message carries AIRR information.

This can support the terminal in obtaining an accurate AI model response message. The "identification information of an AI service model requested by the terminal" may correspond to the AI service type information, but is not limited thereto.

One or more embodiments of the present disclosure further provides an information transmission method, applied to a third core network device, as shown in FIG. 6, the method including:
Step 61: receiving an AI model training request sent by a first core network device; wherein the AI model training request carries AI service type information and candidate AI model information;
Step 62: feeding back, according to the AI model training request, an AI model training response to the first core network device, and sending AI model training information corresponding to the AI model training request to a second core network device.

The first core network device may be implemented as an AI Evaluation and Selection Function (AIESF) device, and/or, the third core network device may be implemented as an AI Model Storage Function (AIMSF) device, and/or, the candidate AI model information may be obtained according to the correspondence relationship (such as a relationship table) among "AI service type-AI service model-evaluation metric", and/or, the "AI model training information" may include: terminal identifier, optimal AI service model ID (corresponding to the AI model request message), and corresponding hyperparameter group ID (corresponding to the AI service model ID), but is not limited thereto.

The information transmission method provided by this embodiment of the present disclosure receives an AI model training request sent by a first core network device; wherein the AI model training request carries AI service type information and candidate AI model information; and feeds back, according to the AI model training request, an AI model training response to the first core network device, and sends AI model training information corresponding to the AI model training request to a second core network device. This can support providing AI model information corresponding to an AI model request message to the terminal, thereby supporting providing AI models based on user requirements; and effectively solves the problem in related art of inability to support providing AI models based on user requirements.

The feeding back, according to the AI model training request, an AI model training response to the first core network device includes: training a candidate AI model according to the AI service type information and the candidate AI model information, and obtaining an evaluation result; and feeding back the AI model training response to the first core network device according to the evaluation result.

This can specifically and accurately obtain the AI model training response.

In this embodiment of the present disclosure, the AI model training request further carries AIRR information; the training a candidate AI model according to the AI service type information and the candidate AI model information, and obtaining an evaluation result includes: training the candidate AI model according to the AI service type information and the candidate AI model information, to obtain a training result; determining weights of evaluation metric according to the AIRR information; and obtaining the evaluation result according to the weights and the training result.

This can accurately obtain the evaluation result corresponding to the candidate AI model. The "training a candidate AI model according to the AI service type information and the candidate AI model information, to obtain a training result; determining weights of evaluation metric according to the AIRR information; and obtaining the evaluation result according to the weights and the training result" may specifically include: training multiple candidate AI models in parallel (such as starting multiple training processes to simultaneously train different AI models), determining evaluation metric corresponding to each candidate AI model according to the correspondence relationship (such as a relationship table) among "AI service type-AI service model-evaluation metric", evaluating the output results of each candidate AI model using the evaluation metric, to obtain a training result; determining an importance ranking of evaluation metric according to the AIRR information, allocating corresponding weights to each evaluation metric, calculating the evaluation metric results calculated for each candidate AI model according to the weights (such as multiplying the evaluation metric results calculated for each candidate AI model by corresponding weights and summing them), to obtain a comprehensive training score (i.e., evaluation result); but is not limited thereto.

It is noted that the related content among the methods on various sides (such as the first core network device side and the terminal side) above may refer to each other, and repeated parts will not be described again.

The information transmission method provided by this embodiment of the present disclosure will be illustrated by examples below. The first core network device is exemplified as an AI Evaluation and Selection Function (AIESF) device, the second core network device is exemplified as a Policy Control Function (PCF) device, and the third core network device is exemplified as an AI Model Storage Function (AIMSF) device.

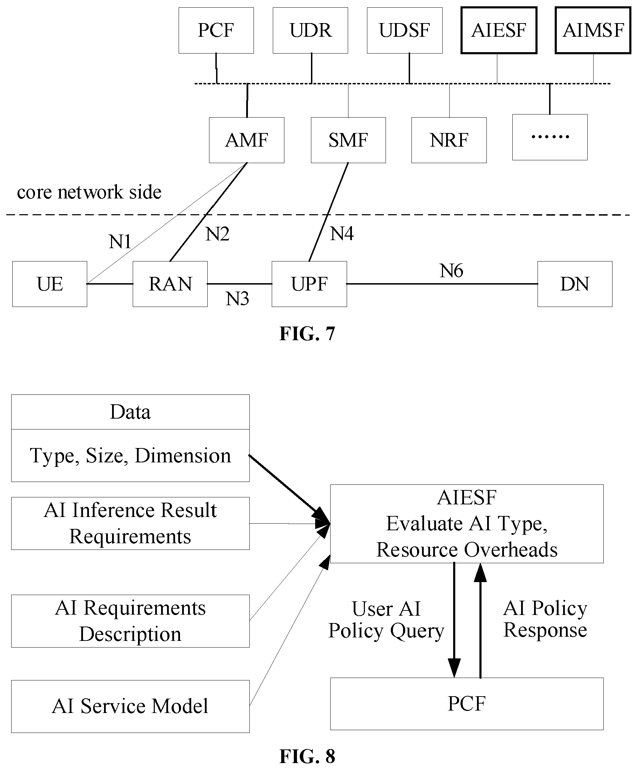

For the above technical problem, and considering that: to enable the 6G network to have endogenous intelligence capabilities, it should not only provide AI model discovery and services to network element functions inside the network, but also provide discovery of multiple AI types of models to mobile communication user equipment (UE), and should perform reasonable and efficient AI model selection according to AI service requirements. The network element functions and mobile communication user equipment mentioned above are both users with AI requirements. The users have registered to the network before performing AI model discovery and on-demand selection, and have generated AI services to be processed. Based on this, one or more embodiments of the present disclosure provides an information transmission method, which may specifically be implemented as a 6G endogenous intelligence AI model discovery and on-demand selection method, mainly involving: to achieve AI model discovery and on-demand selection, as shown in FIG. 7, two network functions are newly added in the network structure, namely AI Evaluation and Selection Function (AIESF) and AI Model Storage Function (AIMSF). The AIESF and AIMSF will be introduced separately below. In addition, PCF in FIG. 7 represents Policy Control Function, UDR represents Unified Data Repository, UDSF represents Unstructured Data Storage Network Function, AMF represents Access and Mobility Management Function, SMF represents Session Management Function, NRF represents Network Repository Function, RAN represents Radio Access Network, UPF represents User Plane Function, DN represents Data Network, and N1, N2, N3, N4, and N6 represent interfaces between corresponding network elements.
1. AI Evaluation and Selection Function (AIESF):
   1) Deployable position is on the core network side;
   2) Capable of evaluating computation resource and storage resource overheads as well as computation time, etc.;
   3) Supports AI model discovery function, receives AI model discovery requests from the RAN side or other network element functions in the core network, and feeds back corresponding discovered AI models;
   4) Capable of maintaining (including adding, deleting, and updating) AI model information stored by the AIMSF, and synchronizing AI model information with the AIMSF; wherein the AI model information includes model name, identification ID, model description, etc.;
   5) Capable of evaluating whether a submitted AI task has a matched trained model (i.e., AI model), also capable of evaluating data type and data size information, and capable of balancing computation time and model output accuracy metrics to select an optimal AI model, etc. At the same time, it can also combine AI policy messages (corresponding to the above model policy information) provided by the PCF to make intelligent AI model selection decisions.
2. AI Model Storage Function (AIMSF):
   1) Deployable on the core network side;
   2) Capable of storing multiple types of AI models, see Table 1-1 below, the AIMSF may store pre-configured AI models and hyperparameters (corresponding to the AI models); specifically, the search space of the AIMSF may be composed of pre-configured AI models and hyperparameters (corresponding to the AI models), but is not limited thereto.
   3) Supports receiving AI model training requests, and provides corresponding AI service model training and inference services according to the training requests;
   4) Responsible for maintaining AI models applicable to solving various types of problems (corresponding to service requests of various types of AI models) and corresponding hyperparameter data. It can be understood that information after training AI models is stored.
   5) Supports intelligently iteratively updating stored AI models or obtaining more suitable models according to AI service types; also supports adding and/or deleting operations on AI models. In addition, operation and maintenance personnel can also add or delete AI models through a management platform.

**Table 1-1 Comparison Table of AI Service Types and Matched Service Models and Evaluation metric**

| AI Service Type | AI Service Model | Evaluation metric |
|---|---|---|
| Classification (Cla) | SVM, SGD, KNN, RF | Accuracy, Precision, Recall, F1-Score |
| Prediction (Pred) | DT, LR, CNN, LTSM | MSE, RMSE, MAE, R-squared |
| Regression (Reg) | SVM, SGD, RF | MSE, RMSE, MAE, R-squared |
| Clustering (Clust) | K-means | SSE, SI |
| Computer Vision (CV) | CNN, YOLO | Accuracy, Precision, Recall, F1-Score |

Wherein, SVM represents Support Vector Machines model, SGD represents Stochastic Gradient Descent, KNN represents K-Nearest Neighbor, RF represents Random Forest, DT represents Decision Tree, LR represents Logistics Regression model, CNN represents Convolutional Neural Network, LSTM represents Long Short-Term Memory network, K-means represents k-means clustering algorithm, YOLO represents You Only Look Once;
F1-Score represents balanced F Score, which is the harmonic mean of precision and recall;
MSE represents Mean Square Error, RMSE represents Root Mean Square Error, MAE represents Mean Absolute Error, R-squared represents goodness of fit, SSE represents Sum of Squares for Error, SI represents Silhouette Index.

In this solution, AI models can be pre-deployed in the AIMSF, and the AIMSF stores multiple types of pre-trained models. The generation of AI models is related to AI model training, which will not be elaborated in detail here.

This solution will be specifically illustrated by examples below.

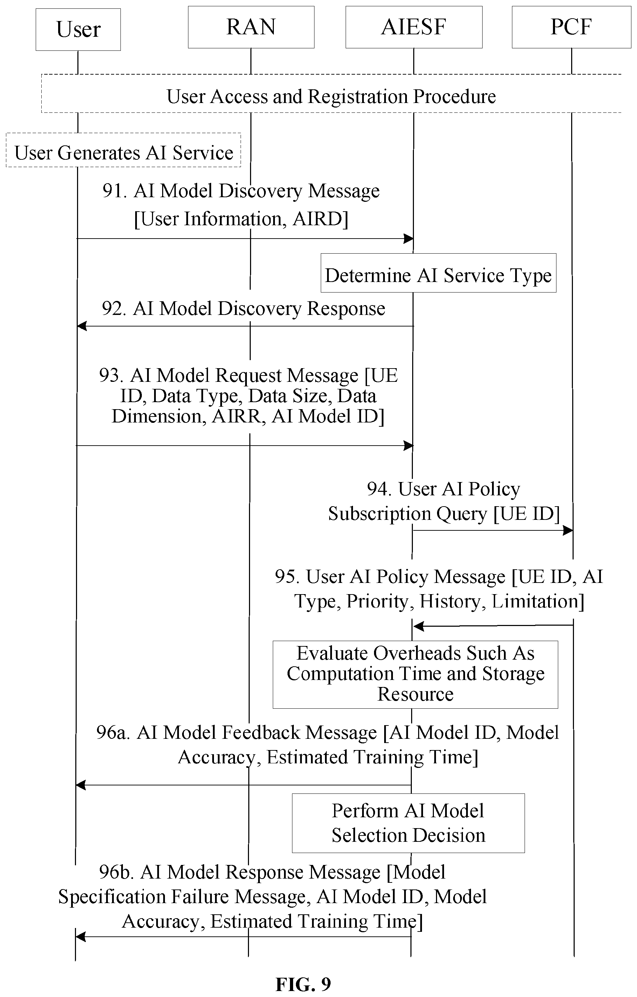

Embodiment 0: Situation where the user specifies an AI model;
This embodiment may be implemented using the architecture shown in FIG. 8, specifically as shown in FIG. 9, including the following steps:
Step 91. The user sends an AI model discovery message to the AIESF (corresponding to the above sending an AI model discovery message to the first core network device), wherein the message content may include user information (UE Information) and AI Requirements Description (AIRD). When the user is a mobile communication user, the user information may include user ID (such as UE ID), application information triggering AI service, vendor identifier, etc. When the user is a network element function NF inside the network, the user information may include NF Profile (network element function configuration), etc. The AIRD may include problem description, data source (whether to request data collection), etc.
Step 92. The AIESF analyzes the AI model discovery message and determines the AI service type according to the AIRD. This corresponds to the above determining AI service type information according to the AIRD information.

The AIESF responds to the user, sending an AI model discovery response to the user (corresponding to the above feeding back an AI model discovery response to the terminal), indicating that the AIESF has received the AI service requirement (which may also be understood as AI service requirement) and has classified the AI type according to the requirement description. The response content may include AI service type (corresponding to the above AI service type information).

Step 93. The user sends an AI model request message (corresponding to the above sending an AI model request message to a first core network device), wherein the message content may include user ID (such as UE ID), Data Type, Data Size, Data Dimension, AI Inference Result Requirements (AIRR), and information related to the applied AI service model (such as AI Model ID, which may correspond to the received AI service type information). The AI service model may be provided according to whether the user has historical experience and knowledge of AI training. Specifically, this embodiment considers that the user specifies an AI model, and the AI model sent in Step 93 may be specified by the user according to historical experience information.

Step 94. The AIESF queries the user-subscribed user AI model policy from the PCF (by sending user AI policy subscription query information) to determine whether the AI service model applied by the user is within the user-subscribed model range. This corresponds to the above sending, according to the AI model request message, an AI model policy query request for the terminal to a second core network device. The user AI policy subscription query information may carry the UE ID.

Step 95. The PCF responds to the user AI model policy query, returning a user AI model policy message (corresponding to the above receiving an AI model policy query request for a terminal sent by a first core network device; and feeding back, according to the AI model policy query request, an AI model policy query response for the terminal to the first core network device). The user AI model policy message may include at least one of: user-subscribed AI model type (AI Type), AI service priority (Priority), historical AI model selection information and hyperparameters (corresponding to History in the figure), computation resource and storage resource consumption limitations (corresponding to Limitation in the figure), model charging, transmission overhead, etc. The user AI model policy message may also include the UE ID.

The AIESF evaluates overheads of computation time and computation resource, storage resource, etc. according to data type and data size information in the AI model request message (and may also include extracting data features). This corresponds to the above determining overhead information of an AI service corresponding to the AI model request message according to the overhead information; the overhead information includes at least one of: computation time information, computation resource overhead information, or storage resource overhead information. The "AIESF evaluates overheads of computation time and computation resource, storage resource, etc. according to data type and data size information in the AI model request message" may be executed after the AIESF determines according to the AI model policy message that the AI service model requested by the terminal satisfies the AIRR. Further, when the AIESF determines according to the AI model policy message that the AI service model requested by the terminal does not satisfy the AIRR, it may switch to the "AIESF evaluates overheads of computation time and computation resource, storage resource, etc. according to data type and data size information in the AI model request message, and extracts data features" in Embodiment 1 or 2 below to continue execution, to complete subsequent operations of feeding back the AI model policy query response to the terminal (such as continuing to execute Steps 116-118 in Embodiment 1), but is not limited thereto.

Subsequently, proceed to Step 96a or 96b:
Step 96a. If the AI service model applied by the user is within the user-subscribed model range and satisfies the Limitation provided by the PCF, the AIESF sends an AI model feedback message (which may also be called an AI model response message) to the user. The message content may include AI Model ID (consistent with the AI Model ID in Step 93), AI model accuracy, estimated training time, etc. This corresponds to the above when the first determination result indicates that the AI service model requested by the terminal is within the subscribed model range corresponding to the terminal, determining AI model information according to the identification information (which may include: AI Model ID, AI model accuracy, estimated training time, etc.).
Step 96b. If the AI service model applied by the user is not within the user-subscribed model range, the AIESF may make an optimal model selection decision according to the maintained AI model information stored by the AIMSF, combined with the received user AI model request message and the AI model policy message provided by the PCF. This corresponds to the above when the first determination result indicates that the AI service model requested by the terminal is not within the subscribed model range corresponding to the terminal, determining AI model information corresponding to the terminal according to the AI model request message, stored AI model information, and the model policy information carried in the AI model policy query response. Then, the AIESF sends an AI model response message to the user (corresponding to the above feeding back the AI model response message to the terminal according to the AI model information), indicating that the user-specified AI model has failed (the content of this message may include the reason for failure), and provides recommended AI model information to the user. The model information may include AI Model ID, AI model accuracy, estimated training time, etc.

In this solution, the AI model is stored in the AIMSF, and after the AIESF evaluates based on a series of factors, it selects the most suitable one from the AIMSF (the AIESF is responsible for maintaining the AI model information stored by the AIMSF); but is not limited thereto.

In addition, the related content of the AI model request message mentioned above is introduced as follows:
a) Data Type, may include at least one of: Text (TXT), Image (IMG), Audio (AUD), Video (VID), Data (DAT), etc.;
b) AI Service Type (AI Types), may include at least one of: Classification (Cla), Prediction (Pred), Regression (Reg), Clustering (Clust), Computer Vision (CV), etc.;
c) AI Service Model (AI Model), may include at least one of: Support Vector Machines (SVM), Stochastic Gradient Descent (SGD), K-Nearest Neighbor (KNN), Neural Network, Logistics Regression (LR), Decision Tree (DT), Convolutional Neural Network (CNN), Long Short-Term Memory (LSTM), K-means, Random Forest (RF), You Only Look Once (YOLO), etc.;
d) AI Inference Result Requirements (AIRR), may include at least one of: expected accuracy, mean square error, training time, generalization, consistency between loss function and optimization objective, fairness, etc.

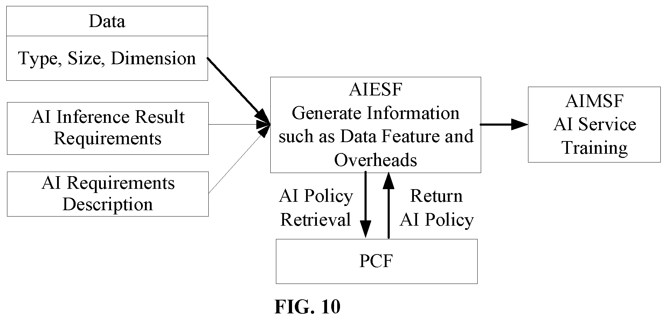

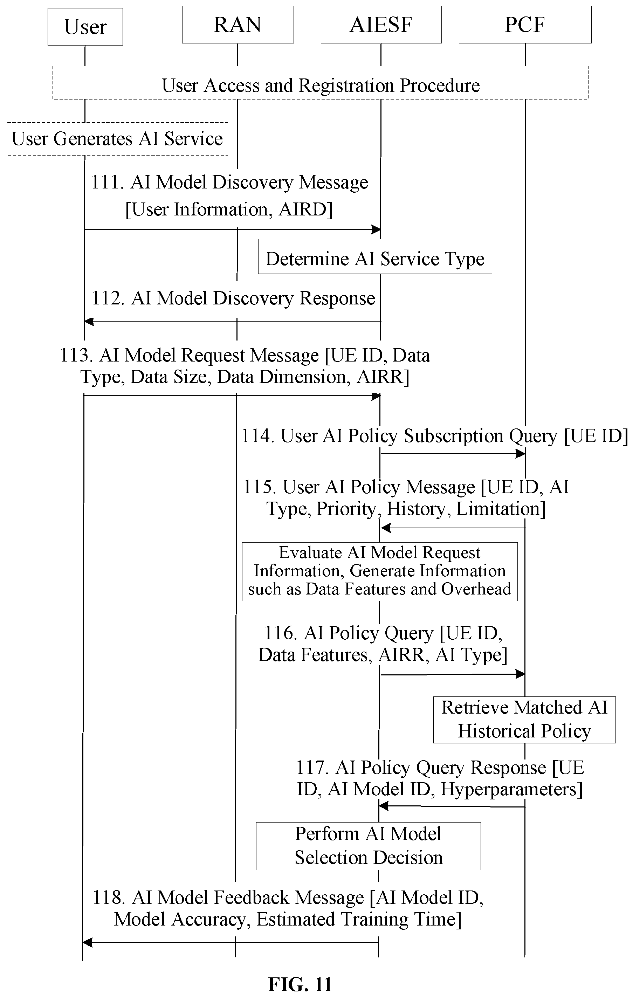

Embodiment 1: Situation where the user does not specify an AI model, but the PCF stores a corresponding AI policy, and there is already historical experience and knowledge;
This embodiment may be implemented using the architecture shown in FIG. 10, specifically as shown in FIG. 11, including the following steps:
Step 111. The user sends an AI model discovery message to the AIESF (corresponding to the above sending an AI model discovery message to the first core network device), wherein the message content may include user information (UE Information) and AI Requirements Description (AIRD). When the user is a mobile communication user, the user information may include user ID (such as UE ID), application information triggering AI service, vendor identifier, etc. When the user is a network element function NF inside the network, the user information may include NF Profile, etc. The AIRD may include problem description, data source (whether to request data collection), etc.
Step 112. The AIESF analyzes the AI model discovery message and determines the AI service type according to the AIRD. This corresponds to the above determining AI service type information according to the AIRD information.

The AIESF responds to the user, sending an AI model discovery response to the user (corresponding to the above feeding back an AI model discovery response to the terminal), indicating that the AIESF has received the AI service requirement (which may also be understood as AI service requirement) and has classified the AI type according to the requirement description. The response content may include AI service type (corresponding to the above AI service type information).

Step 113. The user sends an AI model request message (corresponding to the above sending an AI model request message to a first core network device), wherein the message content may include user ID (such as UE ID), Data Type, Data Size, Data Dimension, and AI Inference Result Requirements (AIRR). The AI service model may be provided according to whether the user has historical experience and knowledge of AI training.

The AI model request message in Step 113 does not carry: information related to the applied AI service model (such as AI Model ID, which may correspond to the received AI service type information). Specifically, the difference between Step 113 in this embodiment and Step 93 in Embodiment 0 is: the AI model request message in this embodiment does not provide an AI Model ID, i.e., does not specify an AI model.

Step 114. The AIESF queries the user-subscribed user AI model policy from the PCF (by sending user AI policy subscription query information). This corresponds to the above sending, according to the AI model request message, an AI model policy query request for the terminal to a second core network device. The user AI policy subscription query information may carry the UE ID.

Step 115. The PCF responds to the user AI model policy query, returning a user AI model policy message (corresponding to the above receiving an AI model policy query request for a terminal sent by a first core network device; and feeding back, according to the AI model policy query request, an AI model policy query response for the terminal to the first core network device). The user AI model policy message may include at least one of: user-subscribed AI model type (AI Type), AI service priority (Priority), historical AI model selection information and hyperparameters (corresponding to History in the figure), computation resource and storage resource consumption limitations (corresponding to Limitation in the figure), model charging, transmission overhead, etc. The user AI model policy message may also include the UE ID.

The AIESF evaluates overheads of computation time and computation resource, storage resource, etc. according to data type and data size information in the AI model request message (corresponding to the above determining overhead information of an AI service corresponding to the AI model request message according to the overhead information; the overhead information includes at least one of: computation time information, computation resource overhead information, or storage resource overhead information), and extracts data features; it may also be understood that the AIESF evaluates AI model request information (corresponding to the AI model request message), generating data features and overhead information.

Step 116. The AIESF sends an AI policy query request to the PCF. The request may include at least one of: user ID (i.e., UE ID), data features (Data features), AI Inference Result Requirements (AIRR), or AI service type information. This request may be used to trigger the PCF to perform: determining whether there is already historical experience (AI model-related experience information) corresponding to the AI service generated by the above user according to the above information.

The PCF retrieves historical experience and knowledge matching the AIRR and AI service type according to the information provided in the AI policy query request, and determines whether there is a matched AI historical policy. This corresponds to the above determining whether an AI historical policy corresponding to the AI model policy query request exists according to the AIRR information and the AI service type information, to obtain a second determination result.

It is noted that in this embodiment, the request sent by the AIESF to the PCF in Step 114 and the request sent by the AIESF to the PCF in Step 116 may be included in the above AI model policy query request for the terminal, i.e., belong to two sub-requests of this request. This embodiment is performed in a manner where these two sub-requests are sent separately, but of course they may also be sent together, which is not limited herein.

Step 117. If the PCF matches a suitable AI policy, it returns the AI policy (AI service model and corresponding hyperparameters) to the AIESF. This corresponds to the above feeding back, according to the second determination result, an AI model policy query response for the terminal to the first core network device; the AI model response message carries AI model information. Specifically, corresponding to when the second determination result indicates that the AI historical policy corresponding to the AI model policy query request exists, feeding back, according to the AI historical policy, an AI model policy query response for the terminal to the first core network device. The AI historical policy includes: model policy information and candidate model information. Specifically, the PCF may provide one or more matched AI policy Profile Lists (configuration lists) to the AIESF according to the matching result. The Profile List may include recorded computation resource overhead, storage resource overhead, model charging, model performance, training time, etc. The information included in each AI policy carried by the Profile List may assist the AIESF in performing AI model selection after receiving the Profile List. For example, after the AIESF receives the Profile List, it performs AI model selection in combination with AIRR information provided by the terminal. Specifically, for example, if the AIRR requires the time to be within 100 milliseconds, the AIESF may accordingly exclude some models from the AI models provided by the PCF, and finally select one of them. In addition, the information included in each AI policy carried by the Profile List may also assist the AIESF in feeding back to the terminal, such as feeding back estimated training time, etc.

After receiving the AI policy query response from the PCF, the AIESF comprehensively considers the user AI policy message and AI policy query response provided by the PCF, combined with resource overhead information evaluated by the AIESF, etc., and makes an AI model selection decision among the multiple AI models provided by the PCF. This corresponds to the above determining AI model information according to the candidate model information and the model policy information carried in the AI model policy query response. The AI policy query response may carry at least one of: UE ID, candidate AI Model ID, or hyperparameters corresponding to the candidate AI Model ID.

Step 118. The AIESF sends an AI model feedback message to the user. The message may include AI Model ID, AI model accuracy, estimated training time, etc. This corresponds to the above feeding back the AI model response message to the terminal according to the AI model information.

Embodiment 2: Situation where the user does not specify an AI model, the PCF does not retrieve a corresponding AI policy, and there is no historical experience and knowledge;

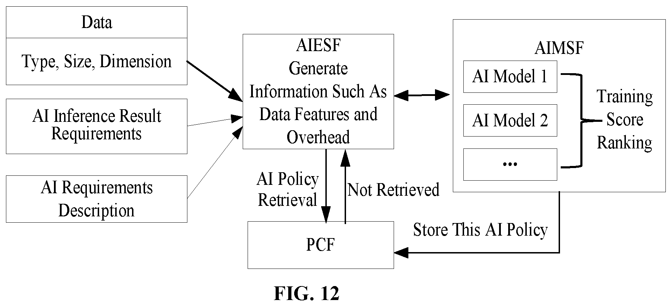

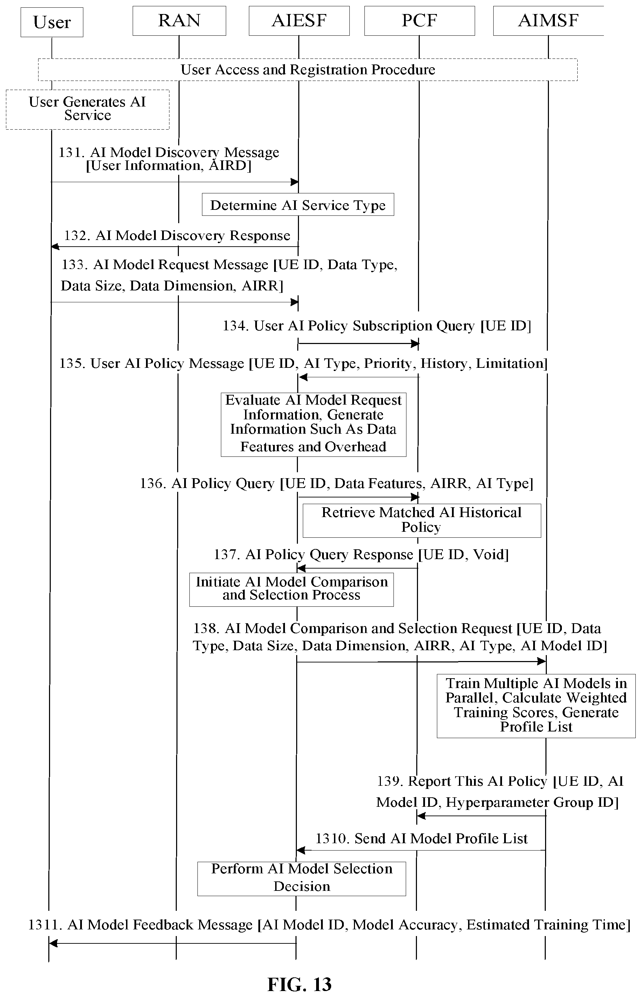

This embodiment may be implemented using the architecture shown in FIG. 12, specifically as shown in FIG. 13, including the following steps:
Step 131. The user sends an AI model discovery message to the AIESF (corresponding to the above sending an AI model discovery message to the first core network device), wherein the message content may include user information (UE Information) and AI Requirements Description (AIRD). When the user is a mobile communication user, the user information may include user ID (such as UE ID), application information triggering AI service, vendor identifier, etc. When the user is a network element function NF inside the network, the user information may include NF Profile, etc. The AIRD may include problem description, data source (whether to request data collection), etc.
Step 132. The AIESF analyzes the AI model discovery message and determines the AI service type according to the AIRD. This corresponds to the above determining AI service type information according to the AIRD information.

The AIESF responds to the user, sending an AI model discovery response to the user (corresponding to the above feeding back an AI model discovery response to the terminal), indicating that the AIESF has received the AI service requirement (which may also be understood as AI service requirement) and has classified the AI type according to the requirement description. The response content may include AI service type (corresponding to the above AI service type information).

Step 133. The user sends an AI model request message (corresponding to the above sending an AI model request message to a first core network device), wherein the message content may include user ID (such as UE ID), Data Type, Data Size, Data Dimension, and AI Inference Result Requirements (AIRR). The AI service model may be provided according to whether the user has historical experience and knowledge of AI training.

The AI model request message in Step 133 does not carry: information related to the applied AI service model (such as AI Model ID, which may correspond to the received AI service type information). Specifically, the difference between Step 133 in this embodiment and Step 93 in Embodiment 0 is: the AI model request message in this embodiment does not provide an AI Model ID, and subsequently no matched AI model is retrieved according to historical experience, and AI model comparison and selection needs to be performed, see the following steps for details.

Step 134. The AIESF queries the user-subscribed user AI model policy from the PCF (by sending user AI policy subscription query information). This corresponds to the above sending, according to the AI model request message, an AI model policy query request for the terminal to a second core network device. The user AI policy subscription query information may carry the UE ID.

Step 135. The PCF responds to the user AI model policy query, returning a user AI model policy message (corresponding to the above receiving an AI model policy query request for a terminal sent by a first core network device; and feeding back, according to the AI model policy query request, an AI model policy query response for the terminal to the first core network device). The user AI model policy message may include at least one of: user-subscribed AI model type (AI Type), AI service priority (Priority), historical AI model selection information and hyperparameters (corresponding to History in the figure), computation resource and storage resource consumption limitations (corresponding to Limitation in the figure), model charging, transmission overhead, etc. The user AI model policy message may also include the UE ID.

The AIESF evaluates overheads of computation time and computation resource, storage resource, etc. according to data type and data size information in the AI model request message (corresponding to the above determining overhead information of an AI service corresponding to the AI model request message according to the overhead information; the overhead information includes at least one of: computation time information, computation resource overhead information, or storage resource overhead information), and extracts data features. It may also be understood that the AIESF evaluates AI model request information (corresponding to the AI model request message), generating data features and overhead information.

Step 136. The AIESF sends an AI policy query request to the PCF. The request may include at least one of: user ID (i.e., UE ID), data features (Data features), AI Inference Result Requirements (AIRR), or AI service type information. This request may be used to trigger the PCF to perform: determining whether there is already historical experience (AI model-related experience information) corresponding to the AI service generated by the above user according to the above information.

The PCF retrieves historical experience and knowledge matching the AIRR and AI service type according to the information in the AI policy query request provided in Step 136, and determines whether there is a matched AI historical policy. This corresponds to the above determining whether an AI historical policy corresponding to the AI model policy query request exists according to the AIRR information and the AI service type information, to obtain a second determination result.

It is noted that in this embodiment, the request sent by the AIESF to the PCF in Step 134 and the request sent by the AIESF to the PCF in Step 136 may be included in the above AI model policy query request for the terminal, i.e., belong to two sub-requests of this request. This embodiment is performed in a manner where these two sub-requests are sent separately, but of course they may also be sent together, which is not limited herein.

Step 137. The PCF does not match a suitable AI policy, and returns Void to the AIESF, indicating that no AI model is retrieved (i.e., returning an AI policy query response carrying a null value). This corresponds to the above when the second determination result indicates that the AI historical policy corresponding to the AI model policy query request does not exist, feeding back to the first core network device an AI model policy query response for indicating that model policy information corresponding to the terminal does not exist. The AI policy query response may also carry the UE ID.

After receiving the message that the AI policy is null, the AIESF triggers an AI model comparison and selection process.

Step 138. The AIESF queries the corresponding "Table 1-1 Comparison Table of AI Service Types and Matched Service Models and Evaluation metric" according to the determined AI service type, and sends an AI model comparison and selection request to the AIMSF. The request may include the content in the AI model request message in Step 133, as well as the AI service type and corresponding multiple AI service model IDs. This corresponds to the above when the AI model policy query response indicates that model policy information corresponding to the terminal does not exist, sending an AI model training request to a third core network device; the AI model training request carries the AI service type information and candidate AI model information.

The AIMSF trains multiple AI models in parallel, calculates weighted training scores, and generates a Profile List. Specifically, it may include: trying multiple AI models in parallel, starting multiple training processes to simultaneously train different AI models, and evaluating the output results of each AI model according to the evaluation metric provided in Table 1-1. This corresponds to the above training a candidate AI model according to the AI service type information and the candidate AI model information, to obtain a training result. Further, it may also determine an importance ranking of evaluation metric according to AI inference result requirements, allocate corresponding weights to each evaluation metric, multiply the evaluation metric results calculated for each model by corresponding weights, and sum them (i.e., sum the metrics multiplied by weights corresponding to each model), to obtain comprehensive training scores for each model, and generate an AI model Profile List. This corresponds to the above determining weights of evaluation metric according to the AIRR information; and obtaining the evaluation result according to the weights and the training result.

Step 139. The AIMSF stores the AI models and hyperparameter data trained this time. The AIMSF also reports this AI policy information to the PCF (corresponding to the above sending AI model training information corresponding to the AI model training request to a second core network device). The AI policy information may include user ID (corresponding to the above terminal identifier), optimal AI service model ID (corresponding to the AI model request message), and corresponding hyperparameter group ID (corresponding to the AI service model ID), for preservation as historical experience and knowledge, facilitating subsequent rapid retrieval.

Step 1310. The AIMSF selects the top three models with comprehensive training scores, and sends an AI model Profile List to the AIESF. This corresponds to the above feeding back the AI model training response to the first core network device according to the evaluation result.

After receiving the AI model Profile List sent by the AIMSF, the AIESF comprehensively considers the Profile List, user AI policy message provided by the PCF, overhead information evaluated by the AIESF, AIRR information, etc., and makes an AI model selection decision. This corresponds to the above determining AI model information according to the overhead information and the AI model training response.

Step 1311. The AIESF sends an AI model feedback message to the user. The message may include AI Model ID, AI model accuracy, estimated training time, etc. This corresponds to the above feeding back the AI model response message to the terminal according to the AI model information.

From the above, Embodiment 1 and Embodiment 2 are two situations. Embodiment 1 retrieves one or more AI models based on historical experience obtained from the PCF, and the AIESF performs model selection among them. Embodiment 2 does not retrieve matched historical experience, and requires the AIMSF to perform model comparison and selection. The processes after the 7th step in the two embodiments are different.

It is noted that the related content among the above various embodiments may refer to each other, and repeated parts will not be described again.

From the above, this embodiment of the present disclosure: for the architecture of native intelligence of 6G network and the vision of intelligent inclusiveness, proposes an AI model discovery and on-demand selection method. Specifically, by newly adding two network functions, AIESF and AIMSF, the proposed method can not only serve network element functions inside the network, but also provide AI services to mobile communication user equipment UE, achieve AI model discovery, and the proposed method can also achieve on-demand selection of AI models combined with service requirements and other information. Based on this, the method provided by this embodiment of the present disclosure contributes to the realization of native intelligence of 6G network, and can flexibly respond to on-demand selection of multiple AI types and models for different service requirements and scenarios.

In summary, the solution provided by this embodiment of the present disclosure has the following advantages:
(1) For the future 6G endogenous intelligence architecture, it can support achieving AI model discovery and decision-making for on-demand AI model selection based on data provided by users and AI service requirements.
(2) It expands the AI capabilities of the network. The proposed AIESF and AIMSF with AI capabilities not only serve the internal network but can also provide AI services externally.
(3) It improves the flexibility and efficiency of AI model selection, establishes retrieval tables for different AI types, stores new AI training and inference policies and corresponding hyperparameters, and can flexibly and efficiently perform on-demand selection of multiple AI types and models for different service requirements and scenarios.

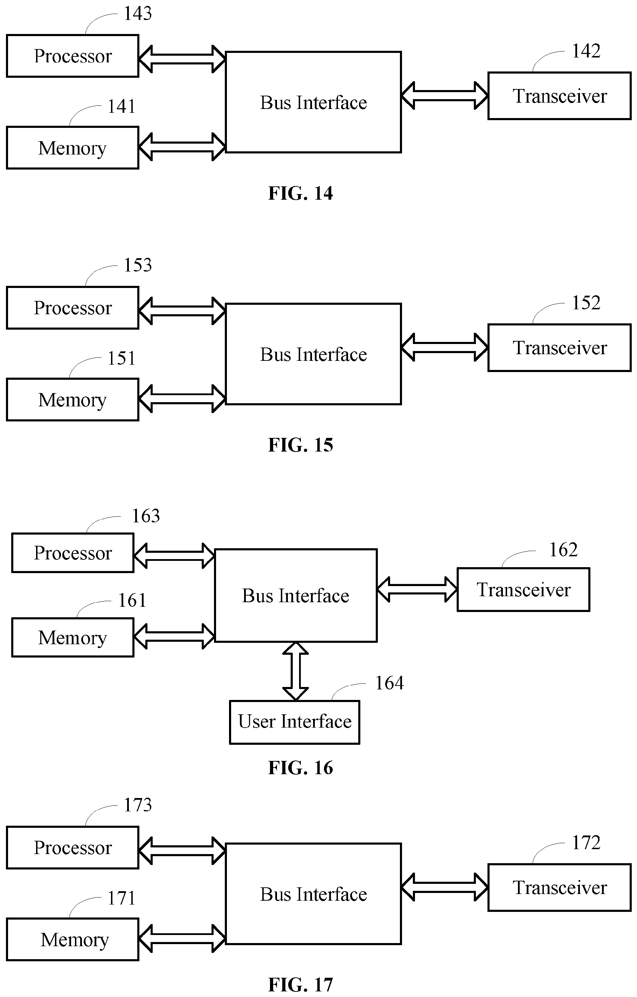

An embodiment of the present disclosure further provides an information transmission device. The information transmission device is a first core network device. As shown in FIG. 14, the device includes a memory 141, a transceiver 142, and a processor 143:
the memory 141 is configured to store a computer program; the transceiver 142 is configured to transmit and receive data under control of the processor 143; the processor 143 is configured to read the computer program in the memory 141 and perform the following operations:
receiving, through the transceiver 142, an AI model request message sent by a terminal;
sending, according to the AI model request message and through the transceiver 142, an AI model policy query request for the terminal to a second core network device;
receiving, through the transceiver 142, an AI model policy query response for the terminal fed back by the second core network device; and
feeding back, according to the AI model policy query response, an AI model response message to the terminal; wherein the AI model response message carries AI model information.

The information transmission device provided by this embodiment of the present disclosure receives an AI model request message sent by a terminal; sends, according to the AI model request message, an AI model policy query request for the terminal to a second core network device; receives an AI model policy query response for the terminal fed back by the second core network device; and feeds back, according to the AI model policy query response, an AI model response message to the terminal; wherein the AI model response message carries AI model information. This can support providing corresponding AI model information to the terminal according to the AI model request message, thereby supporting providing AI models based on user requirements, and effectively solves the problem in related art of inability to support providing AI models based on user requirements.

Specifically, the transceiver 142 is configured to receive and send data under control of the processor 143.

In FIG. 14, a bus architecture may include any number of interconnected buses and bridges, specifically linking together various circuits including one or more processors represented by the processor 143 and a memory represented by the memory 141. The bus architecture may also link together various other circuits such as peripheral devices, voltage regulators, and power management circuits, which are all well known in the art and therefore will not be further described herein. A bus interface provides an interface. The transceiver 142 may be multiple elements, including a transmitter and a receiver, providing units for communicating with various other apparatuses over transmission media including wireless channels, wired channels, optical cables, and other transmission media. The processor 143 is responsible for managing the bus architecture and general processing, and the memory 141 may store data used by the processor 143 when performing operations.

The processor 143 may be a Central Processing Unit (CPU), an Application Specific Integrated Circuit (ASIC), a Field-Programmable Gate Array (FPGA), or a Complex Programmable Logic Device (CPLD), and the processor may also adopt a multi-core architecture.

Further, the operations further include: before receiving the AI model request message sent by the terminal, receiving, through the transceiver, an AI model discovery message sent by the terminal; wherein the AI model discovery message carries Artificial Intelligence Requirements Description (AIRD) information; determining AI service type information according to the AIRD information, and feeding back, through the transceiver, an AI model discovery response to the terminal.

The AI model request message carries identification information of an AI service model requested by the terminal; the feeding back, according to the AI model policy query response, an AI model response message to the terminal includes: determining, according to the AI model policy query response and the identification information, whether the AI service model requested by the terminal is within a subscribed model range corresponding to the terminal, to obtain a first determination result; obtaining AI model information according to the first determination result; and feeding back the AI model response message to the terminal according to the AI model information.

In this embodiment of the present disclosure, the obtaining AI model information according to the first determination result includes: when the first determination result indicates that the AI service model requested by the terminal is not within the subscribed model range corresponding to the terminal, determining AI model information corresponding to the terminal according to the AI model request message, stored AI model information, and model policy information carried in the AI model policy query response.

The AI model request message further carries overhead information. The overhead information includes at least one of: data type information, data size information, or data dimension information. The model policy information carried in the AI model policy query response includes: overhead limitation information. The operations further include: determining overhead information of an AI service corresponding to the AI model request message according to the overhead information. The overhead information includes at least one of: computation time information, computation resource overhead information, or storage resource overhead information. The determining AI model information according to the AI model request message, locally stored AI model information, and the model policy information carried in the AI model policy query response when the first determination result indicates that the AI service model requested by the terminal is not within the subscribed model range corresponding to the terminal includes: when the first determination result indicates a first situation, or when the first determination result indicates the first situation and the overhead information does not satisfy the overhead limitation information, determining AI model information according to the overhead information, the AI model request message, the locally stored AI model information, and the model policy information carried in the AI model policy query response; wherein the first situation refers to a situation where the AI service model requested by the terminal is not within the subscribed model range corresponding to the terminal.

In this embodiment of the present disclosure, the AI model request message carries Artificial Intelligence Inference Result Requirements (AIRR) information; and the AI model policy query request carries the AIRR information and the AI service type information.

The feeding back, according to the AI model policy query response, an AI model response message to the terminal includes: determining AI model information according to the candidate model information and the model policy information carried in the AI model policy query response; and feeding back the AI model response message to the terminal according to the AI model information.

In this embodiment of the present disclosure, the AI model request message further carries overhead information; the overhead information includes at least one of: data type information, data size information, or data dimension information; the model policy information carried in the AI model policy query response includes: overhead limitation information; the operations further include: determining overhead information of an AI service corresponding to the AI model request message according to the overhead information; the overhead information includes at least one of: computation time information, computation resource overhead information, or storage resource overhead information; the determining AI model information according to the candidate model information and the model policy information carried in the AI model policy query response includes: determining AI model information according to the overhead information, the model policy information carried in the AI model policy query response, and the candidate model information.

The feeding back, according to the AI model policy query response, an AI model response message to the terminal includes: when the AI model policy query response indicates that model policy information corresponding to the terminal does not exist, sending, through the transceiver, an AI model training request to a third core network device; wherein the AI model training request carries the AI service type information and candidate AI model information; receiving, through the transceiver, an AI model training response fed back by the third core network device; determining AI model information according to the AI model training response; and feeding back the AI model response message to the terminal according to the AI model information.

In this embodiment of the present disclosure, the AI model request message further carries overhead information; the overhead information includes at least one of: data type information, data size information, or data dimension information; the model policy information carried in the AI model policy query response includes: overhead limitation information; the operations further include: determining overhead information of an AI service corresponding to the AI model request message according to the overhead information; the overhead information includes at least one of: computation time information, computation resource overhead information, or storage resource overhead information; the determining AI model information according to the AI model training response includes: determining AI model information according to the overhead information and the AI model training response.

It should be noted here that the above device provided by this embodiment of the present disclosure can implement all method steps implemented by the method embodiment on the first core network device side, and can achieve the same technical effects. The same parts and beneficial effects as the method embodiment will not be specifically described again in this embodiment.

An embodiment of the present disclosure further provides an information transmission device. The information transmission device is a second core network device. As shown in FIG. 15, the device includes a memory 151, a transceiver 152, and a processor 153:
the memory 151 is configured to store a computer program; the transceiver 152 is configured to transmit and receive data under control of the processor 153; the processor 153 is configured to read the computer program in the memory 151 and perform the following operations:
receiving, through the transceiver 152, an AI model policy query request for a terminal sent by a first core network device; and
feeding back, according to the AI model policy query request, an AI model policy query response for the terminal to the first core network device.

The information transmission device provided by this embodiment of the present disclosure receives an AI model policy query request for a terminal sent by a first core network device; and feeds back, according to the AI model policy query request, an AI model policy query response for the terminal to the first core network device. This can support providing AI model information corresponding to an AI model request message to the terminal, thereby supporting providing AI models based on user requirements, and effectively solves the problem in related art of inability to support providing AI models based on user requirements.

Specifically, the transceiver 152 is configured to receive and send data under control of the processor 153.

In FIG. 15, a bus architecture may include any number of interconnected buses and bridges, specifically linking together various circuits including one or more processors represented by the processor 153 and a memory represented by the memory 151. The bus architecture may also link together various other circuits such as peripheral devices, voltage regulators, and power management circuits, which are all well known in the art and therefore will not be further described herein. A bus interface provides an interface. The transceiver 152 may be multiple elements, including a transmitter and a receiver, providing units for communicating with various other apparatuses over transmission media including wireless channels, wired channels, optical cables, and other transmission media. The processor 153 is responsible for managing the bus architecture and general processing, and the memory 151 may store data used by the processor 153 when performing operations.

The processor 153 may be a Central Processing Unit (CPU), an Application Specific Integrated Circuit (ASIC), a Field-Programmable Gate Array (FPGA), or a Complex Programmable Logic Device (CPLD), and the processor may also adopt a multi-core architecture.

The AI model policy query request carries a terminal identifier of the terminal; the feeding back, according to the AI model policy query request, an AI model policy query response for the terminal to the first core network device includes: feeding back the AI model policy query response for the terminal to the first core network device according to the terminal identifier.

In this embodiment of the present disclosure, the AI model policy query request carries AIRR information and AI service type information; the feeding back, according to the AI model policy query request, an AI model policy query response for the terminal to the first core network device includes: determining whether an AI historical policy corresponding to the AI model policy query request exists according to the AIRR information and the AI service type information, to obtain a second determination result; and feeding back the AI model policy query response for the terminal to the first core network device according to the second determination result.

The feeding back the AI model policy query response for the terminal to the first core network device according to the second determination result includes: (1) when the second determination result indicates that the AI historical policy corresponding to the AI model policy query request exists, feeding back the AI model policy query response for the terminal to the first core network device according to the AI historical policy; wherein the AI historical policy includes: model policy information and candidate model information; (2) when the second determination result indicates that the AI historical policy corresponding to the AI model policy query request does not exist, feeding back to the first core network device an AI model policy query response for indicating that model policy information corresponding to the terminal does not exist.

It should be noted that the above device provided by this embodiment of the present disclosure can implement all method steps implemented by the method embodiment on the second core network device side, and can achieve the same technical effects. The same parts and beneficial effects as the method embodiment will not be specifically described again in this embodiment.

One or more embodiments of the present disclosure further provides an information transmission device. The information transmission device is a terminal. As shown in FIG. 16, the device includes a memory 161, a transceiver 162, and a processor 163:
the memory 161 is configured to store a computer program; the transceiver 162 is configured to transmit and receive data under control of the processor 163; the processor 163 is configured to read the computer program in the memory 161 and perform the following operations:
sending, through the transceiver 162, an AI model request message to a first core network device; and
receiving, through the transceiver 162, an AI model response message fed back by the first core network device; wherein the AI model response message carries AI model information.

The information transmission device provided by this embodiment of the present disclosure sends an AI model request message to a first core network device; and receives an AI model response message fed back by the first core network device; wherein the AI model response message carries AI model information. This can support obtaining AI model information corresponding to an AI model request message, thereby supporting providing AI models based on user requirements, and effectively solves the problem in related art of inability to support providing AI models based on user requirements.

Specifically, the transceiver 162 is configured to receive and send data under control of the processor 163.

In FIG. 16, a bus architecture may include any number of interconnected buses and bridges, specifically linking together various circuits including one or more processors represented by the processor 163 and a memory represented by the memory 161. The bus architecture may also link together various other circuits such as peripheral devices, voltage regulators, and power management circuits, which are all well known in the art and therefore will not be further described herein. A bus interface provides an interface. The transceiver 162 may be multiple elements, including a transmitter and a receiver, providing units for communicating with various other apparatuses over transmission media including wireless channels, wired channels, optical cables, and other transmission media. For different user equipment, a user interface 164 may also be an interface capable of externally or internally connecting required devices, and the connected devices include but are not limited to a keypad, a display, a speaker, a microphone, a joystick, etc.

The processor 163 is responsible for managing the bus architecture and general processing, and the memory 161 may store data used by the processor 163 when performing operations.

Optionally, the processor 163 may be a Central Processing Unit (CPU), an Application Specific Integrated Circuit (ASIC), a Field-Programmable Gate Array (FPGA), or a Complex Programmable Logic Device (CPLD), and the processor may also adopt a multi-core architecture.

The processor invokes the computer program stored in the memory to execute any of the methods provided by this embodiment of the present disclosure according to obtained executable instructions. The processor and the memory may also be physically arranged separately.

Further, the operations further include: before sending the AI model request message to the first core network device, sending, through the transceiver, an AI model discovery message to the first core network device; wherein the AI model discovery message carries AIRD information; and receiving, through the transceiver, an AI model discovery response fed back by the first core network device.

The AI model request message carries identification information of an AI service model requested by the terminal; and/or, the AI model request message carries overhead information; the overhead information includes at least one of: data type information, data size information, or data dimension information; and/or, the AI model request message carries AIRR information.

It should be noted that the above device provided by this embodiment of the present disclosure can implement all method steps implemented by the method embodiment on the terminal side, and can achieve the same technical effects. The same parts and beneficial effects as the method embodiment will not be specifically described again in this embodiment.

One or more embodiments of the present disclosure further provides an information transmission device. The information transmission device is a third core network device. As shown in FIG. 17, the device includes a memory 171, a transceiver 172, and a processor 173:
the memory 171 is configured to store a computer program; the transceiver 172 is configured to transmit and receive data under control of the processor 173; the processor 173 is configured to read the computer program in the memory 171 and perform the following operations:
receiving, through the transceiver 172, an AI model training request sent by a first core network device; wherein the AI model training request carries AI service type information and candidate AI model information; and
feeding back, according to the AI model training request, an AI model training response to the first core network device, and sending, through the transceiver 172, AI model training information corresponding to the AI model training request to a second core network device.

The information transmission device provided by this embodiment of the present disclosure receives an AI model training request sent by a first core network device; wherein the AI model training request carries AI service type information and candidate AI model information; and feeds back, according to the AI model training request, an AI model training response to the first core network device, and sends AI model training information corresponding to the AI model training request to a second core network device. This can support providing AI model information corresponding to an AI model request message to the terminal, thereby supporting providing AI models based on user requirements, and effectively solves the problem in related art of inability to support providing AI models based on user requirements.

Specifically, the transceiver 172 is configured to receive and send data under control of the processor 173.

In FIG. 17, a bus architecture may include any number of interconnected buses and bridges, specifically linking together various circuits including one or more processors represented by the processor 173 and a memory represented by the memory 171. The bus architecture may also link together various other circuits such as peripheral devices, voltage regulators, and power management circuits, which are all well known in the art and therefore will not be further described herein. A bus interface provides an interface. The transceiver 172 may be multiple elements, including a transmitter and a receiver, providing units for communicating with various other apparatuses over transmission media including wireless channels, wired channels, optical cables, and other transmission media. The processor 173 is responsible for managing the bus architecture and general processing, and the memory 171 may store data used by the processor 173 when performing operations.

The processor 173 may be a Central Processing Unit (CPU), an Application Specific Integrated Circuit (ASIC), a Field-Programmable Gate Array (FPGA), or a Complex Programmable Logic Device (CPLD), and the processor may also adopt a multi-core architecture.

The feeding back, according to the AI model training request, an AI model training response to the first core network device includes: training a candidate AI model according to the AI service type information and the candidate AI model information, and obtaining an evaluation result; and feeding back the AI model training response to the first core network device according to the evaluation result.

Further, the AI model training request further carries AIRR information; the training a candidate AI model according to the AI service type information and the candidate AI model information, and obtaining an evaluation result includes: training the candidate AI model according to the AI service type information and the candidate AI model information, to obtain a training result; determining weights of evaluation metric according to the AIRR information; and obtaining the evaluation result according to the weights and the training result.

It should be noted that the above device provided by this embodiment of the present disclosure can implement all method steps implemented by the method embodiment on the third core network device side, and can achieve the same technical effects. The same parts and beneficial effects as the method embodiment will not be specifically described again in this embodiment.

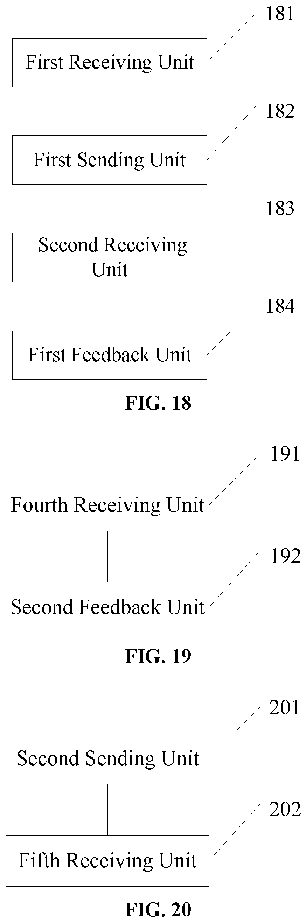

One or more embodiments of the present disclosure further provides an information transmission apparatus, applied to a first core network device. As shown in FIG. 18, the apparatus includes:
a first receiving unit 181, configured to receive an AI model request message sent by a terminal;
a first sending unit 182, configured to send, according to the AI model request message, an AI model policy query request for the terminal to a second core network device;
a second receiving unit 183, configured to receive an AI model policy query response for the terminal fed back by the second core network device; and
a first feedback unit 184, configured to feed back, according to the AI model policy query response, an AI model response message to the terminal; wherein the AI model response message carries AI model information.

The information transmission apparatus provided by this embodiment of the present disclosure receives an AI model request message sent by a terminal; sends, according to the AI model request message, an AI model policy query request for the terminal to a second core network device; receives an AI model policy query response for the terminal fed back by the second core network device; and feeds back, according to the AI model policy query response, an AI model response message to the terminal; wherein the AI model response message carries AI model information. This can support providing corresponding AI model information to the terminal according to the AI model request message, thereby supporting providing AI models based on user requirements, and effectively solves the problem in related art of inability to support providing AI models based on user requirements.

Further, the information transmission apparatus further includes: a third receiving unit, configured to, before receiving the AI model request message sent by the terminal, receive an AI model discovery message sent by the terminal; wherein the AI model discovery message carries Artificial Intelligence Requirements Description (AIRD) information; a first processing unit, configured to determine AI service type information according to the AIRD information, and feed back an AI model discovery response to the terminal.

The AI model request message carries identification information of an AI service model requested by the terminal; the feeding back, according to the AI model policy query response, an AI model response message to the terminal includes: determining, according to the AI model policy query response and the identification information, whether the AI service model requested by the terminal is within a subscribed model range corresponding to the terminal, to obtain a first determination result; obtaining AI model information according to the first determination result; and feeding back the AI model response message to the terminal according to the AI model information.

In this embodiment of the present disclosure, the obtaining AI model information according to the first determination result includes: when the first determination result indicates that the AI service model requested by the terminal is not within the subscribed model range corresponding to the terminal, determining AI model information corresponding to the terminal according to the AI model request message, stored AI model information, and model policy information carried in the AI model policy query response.

The AI model request message further carries overhead information; the overhead information includes at least one of: data type information, data size information, or data dimension information; the model policy information carried in the AI model policy query response includes: overhead limitation information; the information transmission apparatus further includes: a first determining unit, configured to determine overhead information of an AI service corresponding to the AI model request message according to the overhead information; the overhead information includes at least one of: computation time information, computation resource overhead information, or storage resource overhead information; the determining AI model information according to the AI model request message, locally stored AI model information, and the model policy information carried in the AI model policy query response when the first determination result indicates that the AI service model requested by the terminal is not within the subscribed model range corresponding to the terminal includes: when the first determination result indicates a first situation, or when the first determination result indicates the first situation and the overhead information does not satisfy the overhead limitation information, determining AI model information according to the overhead information, the AI model request message, the locally stored AI model information, and the model policy information carried in the AI model policy query response; wherein the first situation refers to a situation where the AI service model requested by the terminal is not within the subscribed model range corresponding to the terminal.

In this embodiment of the present disclosure, the AI model request message carries Artificial Intelligence Inference Result Requirements (AIRR) information; and the AI model policy query request carries the AIRR information and the AI service type information.

The feeding back, according to the AI model policy query response, an AI model response message to the terminal includes: determining AI model information according to the candidate model information and the model policy information carried in the AI model policy query response; and feeding back the AI model response message to the terminal according to the AI model information.

In this embodiment of the present disclosure, the AI model request message further carries overhead information; the overhead information includes at least one of: data type information, data size information, or data dimension information; the model policy information carried in the AI model policy query response includes: overhead limitation information; the information transmission apparatus further includes: a second determining unit, configured to determine overhead information of an AI service corresponding to the AI model request message according to the overhead information; the overhead information includes at least one of: computation time information, computation resource overhead information, or storage resource overhead information; the determining AI model information according to the candidate model information and the model policy information carried in the AI model policy query response includes: determining AI model information according to the overhead information, the model policy information carried in the AI model policy query response, and the candidate model information.

The feeding back, according to the AI model policy query response, an AI model response message to the terminal includes: when the AI model policy query response indicates that model policy information corresponding to the terminal does not exist, sending an AI model training request to a third core network device; wherein the AI model training request carries the AI service type information and candidate AI model information; receiving an AI model training response fed back by the third core network device; determining AI model information according to the AI model training response; and feeding back the AI model response message to the terminal according to the AI model information.

In this embodiment of the present disclosure, the AI model request message further carries overhead information; the overhead information includes at least one of: data type information, data size information, or data dimension information; the model policy information carried in the AI model policy query response includes: overhead limitation information; the information transmission apparatus further includes: a third determining unit, configured to determine overhead information of an AI service corresponding to the AI model request message according to the overhead information; the overhead information includes at least one of: computation time information, computation resource overhead information, or storage resource overhead information; the determining AI model information according to the AI model training response includes: determining AI model information according to the overhead information and the AI model training response.

It should be noted that the above apparatus provided by this embodiment of the present disclosure can implement all method steps implemented by the method embodiment on the first core network device side, and can achieve the same technical effects. The same parts and beneficial effects as the method embodiment will not be specifically described again in this embodiment.

One or more embodiments of the present disclosure further provides an information transmission apparatus, applied to a second core network device. As shown in FIG. 19, the apparatus includes:
a fourth receiving unit 191, configured to receive an AI model policy query request for a terminal sent by a first core network device; and
a second feedback unit 192, configured to feed back, according to the AI model policy query request, an AI model policy query response for the terminal to the first core network device.

The information transmission apparatus provided by this embodiment of the present disclosure receives an AI model policy query request for a terminal sent by a first core network device; and feeds back, according to the AI model policy query request, an AI model policy query response for the terminal to the first core network device. This can support providing AI model information corresponding to an AI model request message to the terminal, thereby supporting providing AI models based on user requirements, and effectively solves the problem in related art of inability to support providing AI models based on user requirements.

The AI model policy query request carries a terminal identifier of the terminal; the feeding back, according to the AI model policy query request, an AI model policy query response for the terminal to the first core network device includes: feeding back the AI model policy query response for the terminal to the first core network device according to the terminal identifier.

In this embodiment of the present disclosure, the AI model policy query request carries AIRR information and AI service type information; the feeding back, according to the AI model policy query request, an AI model policy query response for the terminal to the first core network device includes: determining whether an AI historical policy corresponding to the AI model policy query request exists according to the AIRR information and the AI service type information, to obtain a second determination result; and feeding back the AI model policy query response for the terminal to the first core network device according to the second determination result.

The feeding back the AI model policy query response for the terminal to the first core network device according to the second determination result includes: (1) when the second determination result indicates that the AI historical policy corresponding to the AI model policy query request exists, feeding back the AI model policy query response for the terminal to the first core network device according to the AI historical policy; wherein the AI historical policy includes: model policy information and candidate model information; (2) when the second determination result indicates that the AI historical policy corresponding to the AI model policy query request does not exist, feeding back to the first core network device an AI model policy query response for indicating that model policy information corresponding to the terminal does not exist.

It should be noted that the above apparatus provided by this embodiment of the present disclosure can implement all method steps implemented by the method embodiment on the second core network device side, and can achieve the same technical effects. The same parts and beneficial effects as the method embodiment will not be specifically described again in this embodiment.

One or more embodiments of the present disclosure further provides an information transmission apparatus, applied to a terminal. As shown in FIG. 20, the apparatus includes:
a second sending unit 201, configured to send an AI model request message to a first core network device; and
a fifth receiving unit 202, configured to receive an AI model response message fed back by the first core network device; wherein the AI model response message carries AI model information.

The information transmission apparatus provided by this embodiment of the present disclosure sends an AI model request message to a first core network device; and receives an AI model response message fed back by the first core network device; wherein the AI model response message carries AI model information. This can support obtaining AI model information corresponding to an AI model request message, thereby supporting providing AI models based on user requirements, and effectively solves the problem in related art of inability to support providing AI models based on user requirements.

Further, the information transmission apparatus further includes: a third sending unit, configured to, before sending the AI model request message to the first core network device, send an AI model discovery message to the first core network device; wherein the AI model discovery message carries AIRD information; a sixth receiving unit, configured to receive an AI model discovery response fed back by the first core network device.

The AI model request message carries identification information of an AI service model requested by the terminal; and/or, the AI model request message carries overhead information; the overhead information includes at least one of: data type information, data size information, or data dimension information; and/or, the AI model request message carries AIRR information.

It should be noted that the above apparatus provided by this embodiment of the present disclosure can implement all method steps implemented by the method embodiment on the terminal side, and can achieve the same technical effects. The same parts and beneficial effects as the method embodiment will not be specifically described again in this embodiment.

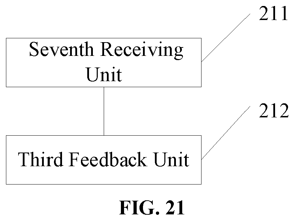

One or more embodiments of the present disclosure further provides an information transmission apparatus, applied to a third core network device. As shown in FIG. 21, the apparatus includes:
a seventh receiving unit 211, configured to receive an AI model training request sent by a first core network device; wherein the AI model training request carries AI service type information and candidate AI model information; and
a third feedback unit 212, configured to feed back, according to the AI model training request, an AI model training response to the first core network device, and send AI model training information corresponding to the AI model training request to a second core network device.

The information transmission apparatus provided by this embodiment of the present disclosure receives an AI model training request sent by a first core network device; wherein the AI model training request carries AI service type information and candidate AI model information; and feeds back, according to the AI model training request, an AI model training response to the first core network device, and sends AI model training information corresponding to the AI model training request to a second core network device. This can support providing AI model information corresponding to an AI model request message to the terminal, thereby supporting providing AI models based on user requirements, and effectively solves the problem in related art of inability to support providing AI models based on user requirements.

The feeding back, according to the AI model training request, an AI model training response to the first core network device includes: training a candidate AI model according to the AI service type information and the candidate AI model information, and obtaining an evaluation result; and feeding back the AI model training response to the first core network device according to the evaluation result.

In this embodiment of the present disclosure, the AI model training request further carries AIRR information; the training a candidate AI model according to the AI service type information and the candidate AI model information, and obtaining an evaluation result includes: training the candidate AI model according to the AI service type information and the candidate AI model information, to obtain a training result; determining weights of evaluation metric according to the AIRR information; and obtaining the evaluation result according to the weights and the training result.

It should be noted that the above apparatus provided by this embodiment of the present disclosure can implement all method steps implemented by the method embodiment on the third core network device side, and can achieve the same technical effects. The same parts and beneficial effects as the method embodiment will not be specifically described again in this embodiment.

It should be noted that the division of units in the embodiments of the present disclosure is schematic, and is merely a logical function division, and there may be other division manners in actual implementation. In addition, functional units in the various embodiments of the present disclosure may be integrated into one processing unit, or each unit may exist alone physically, or two or more units may be integrated into one unit. The above integrated unit may be implemented in the form of hardware, or may be implemented in the form of a software functional unit.

When the integrated unit is implemented in the form of a software functional unit and sold or used as an independent product, it may be stored in a processor-readable storage medium. Based on such understanding, the technical solutions of the present disclosure essentially, or the part contributing to the prior art, or all or part of the technical solutions may be embodied in the form of a software product. The computer software product is stored in a storage medium and includes several instructions for causing a computer device (which may be a personal computer, a server, or a network device, etc.) or a processor to execute all or part of the steps of the methods in the various embodiments of the present disclosure. The foregoing storage medium includes: various media that can store program codes, such as a USB flash drive, a mobile hard disk, a Read-Only Memory (ROM), a Random Access Memory (RAM), a magnetic disk, or an optical disc.

One or more embodiments of the present disclosure further provides a non-transitory readable storage medium. The non-transitory readable storage medium stores a computer program. The computer program is used to cause a processor to perform the method on the first core network device side, the second core network device side, the terminal side, or the third core network device side described above.

The non-transitory readable storage medium may be any available medium or data storage device accessible by a processor, including but not limited to magnetic memories (such as floppy disks, hard disks, tapes, Magneto Optical (MO) disks, etc.), optical memories (such as Compact Discs (CD), Digital Video Discs (DVD), Blu-ray Discs (BD), High-definition Versatile Discs (HVD), etc.), and semiconductor memories (such as ROM, Erasable Programmable Read-Only Memory (EPROM), Electrically Erasable Programmable Read-Only Memory (EEPROM), Non-volatile Memory Device (NAND) FLASH, Solid State Drives (SSD), etc.).

The implementation embodiments of the methods on the first core network device side, the second core network device side, the terminal side, or the third core network device side described above are all applicable to the embodiment of this non-transitory readable storage medium, and can also achieve the same technical effects.

Those skilled in the art should understand that the embodiments of the present disclosure may be provided as a method, a system, or a computer program product. Therefore, the present disclosure may adopt the form of a complete hardware embodiment, a complete software embodiment, or an embodiment combining software and hardware. Moreover, the present disclosure may adopt the form of a computer program product implemented on one or more computer-usable storage media (including but not limited to disk storage and optical storage, etc.) containing computer-usable program codes.

The present disclosure is described with reference to flowcharts and/or block diagrams of the method, device (system), and computer program product according to the embodiments of the present disclosure. It should be understood that each flow and/or block in the flowcharts and/or block diagrams, and combinations of flows and/or blocks in the flowcharts and/or block diagrams, may be implemented by computer-executable instructions. These computer-executable instructions may be provided to a processor of a general-purpose computer, a special-purpose computer, an embedded processor, or other programmable data processing equipment to produce a machine, such that the instructions executed by the computer or other programmable data processing equipment produce an apparatus for implementing the functions specified in one or more flows in the flowcharts and/or one or more blocks in the block diagrams.

These processor-executable instructions may also be stored in a processor-readable memory that can guide a computer or other programmable data processing equipment to operate in a specific manner, such that the instructions stored in the processor-readable memory produce an article of manufacture including instruction apparatus, which implements the functions specified in one or more flows in the flowcharts and/or one or more blocks in the block diagrams.

These processor-executable instructions may also be loaded onto a computer or other programmable data processing equipment, causing a series of operational steps to be performed on the computer or other programmable equipment to produce computer-implemented processing, such that the instructions executed on the computer or other programmable equipment provide steps for implementing the functions specified in one or more flows in the flowcharts and/or one or more blocks in the block diagrams.

It is obvious that those skilled in the art can make various modifications and variations to the present disclosure without departing from the spirit and scope of the present disclosure. Thus, if these modifications and variations of the present disclosure fall within the scope of the claims of the present disclosure and their equivalent technologies, the present disclosure is also intended to include these modifications and variations.

## Claims

1. An information transmission method, applied to a first core network device, the method comprising:
receiving an artificial intelligence (AI) model request message sent by a terminal;
sending, according to the AI model request message, an AI model policy query request for the terminal to a second core network device;
receiving an AI model policy query response for the terminal fed back by the second core network device; and
feeding back, according to the AI model policy query response, an AI model response message to the terminal; wherein the AI model response message carries AI model information.

2. The information transmission method according to claim 1, wherein before receiving the AI model request message sent by the terminal, the method further comprises:
receiving an AI model discovery message sent by the terminal; wherein the AI model discovery message carries artificial intelligence requirements description (AIRD) information;
determining AI service type information according to the AIRD information, and feeding back an AI model discovery response to the terminal.

3. The information transmission method according to claim 1, wherein the AI model request message carries identification information of an AI service model requested by the terminal;
the feeding back, according to the AI model policy query response, an AI model response message to the terminal comprises:
determining, according to the AI model policy query response and the identification information, whether the AI service model requested by the terminal is within a subscribed model range corresponding to the terminal, to obtain a first determination result;
obtaining AI model information according to the first determination result; and
feeding back the AI model response message to the terminal according to the AI model information.

4. The information transmission method according to claim 3, wherein the obtaining AI model information according to the first determination result comprises:
when the first determination result indicates that the AI service model requested by the terminal is not within the subscribed model range corresponding to the terminal, determining AI model information corresponding to the terminal according to the AI model request message, stored AI model information, and model policy information carried in the AI model policy query response.

5. The information transmission method according to claim 4, wherein the AI model request message further carries overhead information; the overhead information comprises at least one of: data type information, data size information, or data dimension information; the model policy information carried in the AI model policy query response comprises: overhead limitation information;
the information transmission method further comprises:
determining overhead information of an AI service corresponding to the AI model request message according to the overhead information; the overhead information comprises at least one of: computation time information, computation resource overhead information, or storage resource overhead information;
the determining AI model information according to the AI model request message, locally stored AI model information, and the model policy information carried in the AI model policy query response when the first determination result indicates that the AI service model requested by the terminal is not within the subscribed model range corresponding to the terminal comprises:
when the first determination result indicates a first situation, or when the first determination result indicates the first situation and the overhead information does not satisfy the overhead limitation information, determining AI model information according to the overhead information, the AI model request message, the locally stored AI model information, and the model policy information carried in the AI model policy query response;
wherein the first situation refers to a situation where the AI service model requested by the terminal is not within the subscribed model range corresponding to the terminal.

6. The information transmission method according to claim 1 or 2, wherein the AI model request message carries artificial intelligence inference result requirements (AIRR) information; and the AI model policy query request carries the AIRR information and the AI service type information.

7. The information transmission method according to claim 6, wherein the feeding back, according to the AI model policy query response, an AI model response message to the terminal comprises:
determining AI model information according to candidate model information and the model policy information carried in the AI model policy query response; and
feeding back the AI model response message to the terminal according to the AI model information.

8. The information transmission method according to claim 7, wherein the AI model request message further carries overhead information; the overhead information comprises at least one of: data type information, data size information, or data dimension information; the model policy information carried in the AI model policy query response comprises: overhead limitation information;
the information transmission method further comprises:
determining overhead information of an AI service corresponding to the AI model request message according to the overhead information; the overhead information comprises at least one of: computation time information, computation resource overhead information, or storage resource overhead information;
the determining AI model information according to the candidate model information and the model policy information carried in the AI model policy query response comprises:
determining AI model information according to the overhead information, the model policy information carried in the AI model policy query response, and the candidate model information.

9. The information transmission method according to claim 6, wherein the feeding back, according to the AI model policy query response, an AI model response message to the terminal comprises:
when the AI model policy query response indicates that model policy information corresponding to the terminal does not exist, sending an AI model training request to a third core network device; wherein the AI model training request carries the AI service type information and candidate AI model information;
receiving an AI model training response fed back by the third core network device;
determining AI model information according to the AI model training response; and
feeding back the AI model response message to the terminal according to the AI model information.

10. The information transmission method according to claim 9, wherein the AI model request message further carries overhead information; the overhead information comprises at least one of: data type information, data size information, or data dimension information; the model policy information carried in the AI model policy query response comprises: overhead limitation information;
the information transmission method further comprises:
determining overhead information of an AI service corresponding to the AI model request message according to the overhead information; the overhead information comprises at least one of: computation time information, computation resource overhead information, or storage resource overhead information;
the determining AI model information according to the AI model training response comprises:
determining AI model information according to the overhead information and the AI model training response.

11. An information transmission method, applied to a second core network device, the method comprising:
receiving an AI model policy query request for a terminal sent by a first core network device; and
feeding back, according to the AI model policy query request, an AI model policy query response for the terminal to the first core network device.

12. The information transmission method according to claim 11, wherein the AI model policy query request carries a terminal identifier of the terminal;
the feeding back, according to the AI model policy query request, an AI model policy query response for the terminal to the first core network device comprises:
feeding back the AI model policy query response for the terminal to the first core network device according to the terminal identifier.

13. The information transmission method according to claim 11, wherein the AI model policy query request carries AIRR information and AI service type information;
the feeding back, according to the AI model policy query request, an AI model policy query response for the terminal to the first core network device comprises:
determining whether an AI historical policy corresponding to the AI model policy query request exists according to the AIRR information and the AI service type information, to obtain a second determination result; and
feeding back the AI model policy query response for the terminal to the first core network device according to the second determination result.

14. The information transmission method according to claim 13, wherein the feeding back the AI model policy query response for the terminal to the first core network device according to the second determination result comprises:
when the second determination result indicates that the AI historical policy corresponding to the AI model policy query request exists, feeding back the AI model policy query response for the terminal to the first core network device according to the AI historical policy; wherein the AI historical policy comprises: model policy information and candidate model information;
when the second determination result indicates that the AI historical policy corresponding to the AI model policy query request does not exist, feeding back to the first core network device an AI model policy query response for indicating that model policy information corresponding to the terminal does not exist.

15. An information transmission method, applied to a terminal, the method comprising:
sending an AI model request message to a first core network device; and
receiving an AI model response message fed back by the first core network device; wherein the AI model response message carries AI model information.

16. The information transmission method according to claim 15, wherein before sending the AI model request message to the first core network device, the method further comprises:
sending an AI model discovery message to the first core network device; wherein the AI model discovery message carries AIRD information;
receiving an AI model discovery response fed back by the first core network device.

17. The information transmission method according to claim 15, wherein the AI model request message carries identification information of an AI service model requested by the terminal; and/or
the AI model request message carries overhead information; the overhead information comprises at least one of: data type information, data size information, or data dimension information; and/or
the AI model request message carries AIRR information.

18. An information transmission method, applied to a third core network device, the method comprising:
receiving an AI model training request sent by a first core network device; wherein the AI model training request carries AI service type information and candidate AI model information; and
feeding back, according to the AI model training request, an AI model training response to the first core network device, and sending AI model training information corresponding to the AI model training request to a second core network device.

19. The information transmission method according to claim 18, wherein the feeding back, according to the AI model training request, an AI model training response to the first core network device comprises:
training a candidate AI model according to the AI service type information and the candidate AI model information, and obtaining an evaluation result; and
feeding back the AI model training response to the first core network device according to the evaluation result.

20. The information transmission method according to claim 19, wherein the AI model training request further carries AIRR information;
the training a candidate AI model according to the AI service type information and the candidate AI model information, and obtaining an evaluation result comprises:
training the candidate AI model according to the AI service type information and the candidate AI model information, to obtain a training result;
determining weights of evaluation metric according to the AIRR information; and
obtaining the evaluation result according to the weights and the training result.

21. An information transmission device, wherein the information transmission device is a first core network device, and comprises a memory, a transceiver, and a processor;
the memory is configured to store a computer program; the transceiver is configured to transmit and receive data under control of the processor; the processor is configured to read the computer program in the memory and perform the following operations:
receiving, through the transceiver, an AI model request message sent by a terminal;
sending, according to the AI model request message and through the transceiver, an AI model policy query request for the terminal to a second core network device;
receiving, through the transceiver, an AI model policy query response for the terminal fed back by the second core network device; and
feeding back, according to the AI model policy query response, an AI model response message to the terminal; wherein the AI model response message carries AI model information.

22. The information transmission device according to claim 21, wherein the operations further comprise:
before receiving the AI model request message sent by the terminal, receiving, through the transceiver, an AI model discovery message sent by the terminal; wherein the AI model discovery message carries artificial intelligence requirements description (AIRD) information;
determining AI service type information according to the AIRD information, and feeding back, through the transceiver, an AI model discovery response to the terminal.

23. The information transmission device according to claim 21, wherein the AI model request message carries identification information of an AI service model requested by the terminal;
the feeding back, according to the AI model policy query response, an AI model response message to the terminal comprises:
determining, according to the AI model policy query response and the identification information, whether the AI service model requested by the terminal is within a subscribed model range corresponding to the terminal, to obtain a first determination result;
obtaining AI model information according to the first determination result; and
feeding back the AI model response message to the terminal according to the AI model information.

24. The information transmission device according to claim 23, wherein the obtaining AI model information according to the first determination result comprises:
when the first determination result indicates that the AI service model requested by the terminal is not within the subscribed model range corresponding to the terminal, determining AI model information corresponding to the terminal according to the AI model request message, stored AI model information, and model policy information carried in the AI model policy query response.

25. The information transmission device according to claim 24, wherein the AI model request message further carries overhead information; the overhead information comprises at least one of: data type information, data size information, or data dimension information; the model policy information carried in the AI model policy query response comprises: overhead limitation information;
the operations further comprise:
determining overhead information of an AI service corresponding to the AI model request message according to the overhead information; the overhead information comprises at least one of: computation time information, computation resource overhead information, or storage resource overhead information;
the determining AI model information according to the AI model request message, locally stored AI model information, and the model policy information carried in the AI model policy query response when the first determination result indicates that the AI service model requested by the terminal is not within the subscribed model range corresponding to the terminal comprises:
when the first determination result indicates a first situation, or when the first determination result indicates the first situation and the overhead information does not satisfy the overhead limitation information, determining AI model information according to the overhead information, the AI model request message, the locally stored AI model information, and the model policy information carried in the AI model policy query response;
wherein the first situation refers to a situation where the AI service model requested by the terminal is not within the subscribed model range corresponding to the terminal.

26. The information transmission device according to claim 21 or 22, wherein the AI model request message carries artificial intelligence inference result requirements (AIRR) information; and the AI model policy query request carries the AIRR information and the AI service type information.

27. The information transmission device according to claim 26, wherein the feeding back, according to the AI model policy query response, an AI model response message to the terminal comprises:
determining AI model information according to candidate model information and the model policy information carried in the AI model policy query response; and
feeding back the AI model response message to the terminal according to the AI model information.

28. The information transmission device according to claim 27, wherein the AI model request message further carries overhead information; the overhead information comprises at least one of: data type information, data size information, or data dimension information; the model policy information carried in the AI model policy query response comprises: overhead limitation information;
the operations further comprise:
determining overhead information of an AI service corresponding to the AI model request message according to the overhead information; the overhead information comprises at least one of: computation time information, computation resource overhead information, or storage resource overhead information;
the determining AI model information according to the candidate model information and the model policy information carried in the AI model policy query response comprises:
determining AI model information according to the overhead information, the model policy information carried in the AI model policy query response, and the candidate model information.

29. The information transmission device according to claim 26, wherein the feeding back, according to the AI model policy query response, an AI model response message to the terminal comprises:
when the AI model policy query response indicates that model policy information corresponding to the terminal does not exist, sending, through the transceiver, an AI model training request to a third core network device; wherein the AI model training request carries the AI service type information and candidate AI model information;
receiving, through the transceiver, an AI model training response fed back by the third core network device;
determining AI model information according to the AI model training response; and
feeding back the AI model response message to the terminal according to the AI model information.

30. The information transmission device according to claim 29, wherein the AI model request message further carries overhead information; the overhead information comprises at least one of: data type information, data size information, or data dimension information; the model policy information carried in the AI model policy query response comprises: overhead limitation information;
the operations further comprise:
determining overhead information of an AI service corresponding to the AI model request message according to the overhead information; the overhead information comprises at least one of: computation time information, computation resource overhead information, or storage resource overhead information;
the determining AI model information according to the AI model training response comprises:
determining AI model information according to the overhead information and the AI model training response.

31. An information transmission device, wherein the information transmission device is a second core network device, and comprises a memory, a transceiver, and a processor;
the memory is configured to store a computer program; the transceiver is configured to transmit and receive data under control of the processor; the processor is configured to read the computer program in the memory and perform the following operations:
receiving, through the transceiver, an AI model policy query request for a terminal sent by a first core network device; and
feeding back, according to the AI model policy query request, an AI model policy query response for the terminal to the first core network device.

32. The information transmission device according to claim 31, wherein the AI model policy query request carries a terminal identifier of the terminal;
the feeding back, according to the AI model policy query request, an AI model policy query response for the terminal to the first core network device comprises:
feeding back the AI model policy query response for the terminal to the first core network device according to the terminal identifier.

33. The information transmission device according to claim 31, wherein the AI model policy query request carries AIRR information and AI service type information;
the feeding back, according to the AI model policy query request, an AI model policy query response for the terminal to the first core network device comprises:
determining whether an AI historical policy corresponding to the AI model policy query request exists according to the AIRR information and the AI service type information, to obtain a second determination result; and
feeding back the AI model policy query response for the terminal to the first core network device according to the second determination result.

34. The information transmission device according to claim 33, wherein the feeding back the AI model policy query response for the terminal to the first core network device according to the second determination result comprises:
when the second determination result indicates that the AI historical policy corresponding to the AI model policy query request exists, feeding back the AI model policy query response for the terminal to the first core network device according to the AI historical policy; wherein the AI historical policy comprises: model policy information and candidate model information;
when the second determination result indicates that the AI historical policy corresponding to the AI model policy query request does not exist, feeding back to the first core network device an AI model policy query response for indicating that model policy information corresponding to the terminal does not exist.

35. An information transmission device, wherein the information transmission device is a terminal, and comprises a memory, a transceiver, and a processor;
the memory is configured to store a computer program; the transceiver is configured to transmit and receive data under control of the processor; the processor is configured to read the computer program in the memory and perform the following operations:
sending, through the transceiver, an AI model request message to a first core network device; and
receiving, through the transceiver, an AI model response message fed back by the first core network device; wherein the AI model response message carries AI model information.

36. The information transmission device according to claim 35, wherein the operations further comprise:
before sending the AI model request message to the first core network device, sending, through the transceiver, an AI model discovery message to the first core network device; wherein the AI model discovery message carries AIRD information;
receiving, through the transceiver, an AI model discovery response fed back by the first core network device.

37. The information transmission device according to claim 35, wherein the AI model request message carries identification information of an AI service model requested by the terminal; and/or
the AI model request message carries overhead information; the overhead information comprises at least one of: data type information, data size information, or data dimension information; and/or
the AI model request message carries AIRR information.

38. An information transmission device, wherein the information transmission device is a third core network device, and comprises a memory, a transceiver, and a processor;
the memory is configured to store a computer program; the transceiver is configured to transmit and receive data under control of the processor; the processor is configured to read the computer program in the memory and perform the following operations:
receiving, through the transceiver, an AI model training request sent by a first core network device; wherein the AI model training request carries AI service type information and candidate AI model information; and
feeding back, according to the AI model training request, an AI model training response to the first core network device, and sending, through the transceiver, AI model training information corresponding to the AI model training request to a second core network device.

39. The information transmission device according to claim 38, wherein the feeding back, according to the AI model training request, an AI model training response to the first core network device comprises:
training a candidate AI model according to the AI service type information and the candidate AI model information, and obtaining an evaluation result; and
feeding back the AI model training response to the first core network device according to the evaluation result.

40. The information transmission device according to claim 39, wherein the AI model training request further carries AIRR information;
the training a candidate AI model according to the AI service type information and the candidate AI model information, and obtaining an evaluation result comprises:
training the candidate AI model according to the AI service type information and the candidate AI model information, to obtain a training result;
determining weights of evaluation metric according to the AIRR information; and
obtaining the evaluation result according to the weights and the training result.

41. An information transmission apparatus, applied to a first core network device, the apparatus comprising:
a first receiving unit, configured to receive an AI model request message sent by a terminal;
a first sending unit, configured to send, according to the AI model request message, an AI model policy query request for the terminal to a second core network device;
a second receiving unit, configured to receive an AI model policy query response for the terminal fed back by the second core network device; and
a first feedback unit, configured to feed back, according to the AI model policy query response, an AI model response message to the terminal; wherein the AI model response message carries AI model information.

42. The information transmission apparatus according to claim 41, further comprising:
a third receiving unit, configured to, before receiving the AI model request message sent by the terminal, receive an AI model discovery message sent by the terminal; wherein the AI model discovery message carries artificial intelligence requirements description (AIRD) information;
a first processing unit, configured to determine AI service type information according to the AIRD information, and feed back an AI model discovery response to the terminal.

43. The information transmission apparatus according to claim 41, wherein the AI model request message carries identification information of an AI service model requested by the terminal;
the feeding back, according to the AI model policy query response, an AI model response message to the terminal comprises:
determining, according to the AI model policy query response and the identification information, whether the AI service model requested by the terminal is within a subscribed model range corresponding to the terminal, to obtain a first determination result;
obtaining AI model information according to the first determination result; and
feeding back the AI model response message to the terminal according to the AI model information.

44. The information transmission apparatus according to claim 43, wherein the obtaining AI model information according to the first determination result comprises:
when the first determination result indicates that the AI service model requested by the terminal is not within the subscribed model range corresponding to the terminal, determining AI model information corresponding to the terminal according to the AI model request message, stored AI model information, and model policy information carried in the AI model policy query response.

45. The information transmission apparatus according to claim 44, wherein the AI model request message further carries overhead information; the overhead information comprises at least one of: data type information, data size information, or data dimension information; the model policy information carried in the AI model policy query response comprises: overhead limitation information;
the information transmission apparatus further comprises:
a first determining unit, configured to determine overhead information of an AI service corresponding to the AI model request message according to the overhead information; the overhead information comprises at least one of: computation time information, computation resource overhead information, or storage resource overhead information;
the determining AI model information according to the AI model request message, locally stored AI model information, and the model policy information carried in the AI model policy query response when the first determination result indicates that the AI service model requested by the terminal is not within the subscribed model range corresponding to the terminal comprises:
when the first determination result indicates a first situation, or when the first determination result indicates the first situation and the overhead information does not satisfy the overhead limitation information, determining AI model information according to the overhead information, the AI model request message, the locally stored AI model information, and the model policy information carried in the AI model policy query response;
wherein the first situation refers to a situation where the AI service model requested by the terminal is not within the subscribed model range corresponding to the terminal.

46. The information transmission apparatus according to claim 41 or 42, wherein the AI model request message carries artificial intelligence inference result requirements (AIRR) information; and the AI model policy query request carries the AIRR information and the AI service type information.

47. The information transmission apparatus according to claim 46, wherein the feeding back, according to the AI model policy query response, an AI model response message to the terminal comprises:
determining AI model information according to candidate model information and the model policy information carried in the AI model policy query response; and
feeding back the AI model response message to the terminal according to the AI model information.

48. The information transmission apparatus according to claim 47, wherein the AI model request message further carries overhead information; the overhead information comprises at least one of: data type information, data size information, or data dimension information; the model policy information carried in the AI model policy query response comprises: overhead limitation information;
the information transmission apparatus further comprises:
a second determining unit, configured to determine overhead information of an AI service corresponding to the AI model request message according to the overhead information; the overhead information comprises at least one of: computation time information, computation resource overhead information, or storage resource overhead information;
the determining AI model information according to the candidate model information and the model policy information carried in the AI model policy query response comprises:
determining AI model information according to the overhead information, the model policy information carried in the AI model policy query response, and the candidate model information.

49. The information transmission apparatus according to claim 46, wherein the feeding back, according to the AI model policy query response, an AI model response message to the terminal comprises:
when the AI model policy query response indicates that model policy information corresponding to the terminal does not exist, sending an AI model training request to a third core network device; wherein the AI model training request carries the AI service type information and candidate AI model information;
receiving an AI model training response fed back by the third core network device;
determining AI model information according to the AI model training response; and
feeding back the AI model response message to the terminal according to the AI model information.

50. The information transmission apparatus according to claim 49, wherein the AI model request message further carries overhead information; the overhead information comprises at least one of: data type information, data size information, or data dimension information; the model policy information carried in the AI model policy query response comprises: overhead limitation information;
the information transmission apparatus further comprises:
a third determining unit, configured to determine overhead information of an AI service corresponding to the AI model request message according to the overhead information; the overhead information comprises at least one of: computation time information, computation resource overhead information, or storage resource overhead information;
the determining AI model information according to the AI model training response comprises:
determining AI model information according to the overhead information and the AI model training response.

51. An information transmission apparatus, applied to a second core network device, comprising:
a fourth receiving unit, configured to receive an AI model policy query request for a terminal sent by a first core network device; and
a second feedback unit, configured to feed back, according to the AI model policy query request, an AI model policy query response for the terminal to the first core network device.

52. The information transmission apparatus according to claim 51, wherein the AI model policy query request carries a terminal identifier of the terminal;
the feeding back, according to the AI model policy query request, an AI model policy query response for the terminal to the first core network device comprises:
feeding back the AI model policy query response for the terminal to the first core network device according to the terminal identifier.

53. The information transmission apparatus according to claim 51, wherein the AI model policy query request carries AIRR information and AI service type information;
the feeding back, according to the AI model policy query request, an AI model policy query response for the terminal to the first core network device comprises:
determining whether an AI historical policy corresponding to the AI model policy query request exists according to the AIRR information and the AI service type information, to obtain a second determination result; and
feeding back the AI model policy query response for the terminal to the first core network device according to the second determination result.

54. The information transmission apparatus according to claim 53, wherein the feeding back the AI model policy query response for the terminal to the first core network device according to the second determination result comprises:
when the second determination result indicates that the AI historical policy corresponding to the AI model policy query request exists, feeding back the AI model policy query response for the terminal to the first core network device according to the AI historical policy; wherein the AI historical policy comprises: model policy information and candidate model information;
when the second determination result indicates that the AI historical policy corresponding to the AI model policy query request does not exist, feeding back to the first core network device an AI model policy query response for indicating that model policy information corresponding to the terminal does not exist.

55. An information transmission apparatus, applied to a terminal, the apparatus comprising:
a second sending unit, configured to send an AI model request message to a first core network device; and
a fifth receiving unit, configured to receive an AI model response message fed back by the first core network device; wherein the AI model response message carries AI model information.

56. The information transmission apparatus according to claim 55, further comprising:
a third sending unit, configured to, before sending the AI model request message to the first core network device, send an AI model discovery message to the first core network device; wherein the AI model discovery message carries AIRD information;
a sixth receiving unit, configured to receive an AI model discovery response fed back by the first core network device.

57. The information transmission apparatus according to claim 55, wherein the AI model request message carries identification information of an AI service model requested by the terminal; and/or
the AI model request message carries overhead information; the overhead information comprises at least one of: data type information, data size information, or data dimension information; and/or
the AI model request message carries AIRR information.

58. An information transmission apparatus, applied to a third core network device, the apparatus comprising:
a seventh receiving unit, configured to receive an AI model training request sent by a first core network device; wherein the AI model training request carries AI service type information and candidate AI model information; and
a third feedback unit, configured to feed back, according to the AI model training request, an AI model training response to the first core network device, and send AI model training information corresponding to the AI model training request to a second core network device.

59. The information transmission apparatus according to claim 58, wherein the feeding back, according to the AI model training request, an AI model training response to the first core network device comprises:
training a candidate AI model according to the AI service type information and the candidate AI model information, and obtaining an evaluation result; and
feeding back the AI model training response to the first core network device according to the evaluation result.

60. The information transmission apparatus according to claim 59, wherein the AI model training request further carries AIRR information;
the training a candidate AI model according to the AI service type information and the candidate AI model information, and obtaining an evaluation result comprises:
training the candidate AI model according to the AI service type information and the candidate AI model information, to obtain a training result;
determining weights of evaluation metric according to the AIRR information; and
obtaining the evaluation result according to the weights and the training result.

61. A non-transitory readable storage medium, wherein the non-transitory readable storage medium stores a computer program, and the computer program is used to cause a processor to perform the method according to any one of claims 1 to 20.
